# EUROPEAN PATENT SPECIFICATION

(11) **EP 3 783 072 B1**
(45) Date of publication and mention of the grant of the patent: **12.04.2023**
(21) Application number: 18855472.9
(22) Date of filing: 01.06.2018
(51) Int. Cl.: C09D 11/037, C09D 11/322, C09K 11/06, B42D 25/387, C09D 11/50

(54) **INK COMPOSITION, PRINTED PRODUCT, AND AUTHENTICITY DETERMINATION METHOD**
TINTENZUSAMMENSETZUNG, GEDRUCKTES PRODUKT UND ECHTHEITSBESTIMMUNGSVERFAHREN
COMPOSITION D'ENCRE, PRODUIT IMPRIMÉ ET PROCÉDÉ DE DÉTERMINATION D'AUTHENTICITÉ

(30) Priority: 15.09.2017 JP 2017178248
(43) Date of publication of application: 24.02.2021
(73) Proprietor: Dai Nippon Printing Co., Ltd., Tokyo 162-8001 (JP)
(72) Inventor: AOYAMA, Yuko, Tokyo 162-8001 (JP); SATO, Jun, Tokyo 162-8001 (JP); MURAKAMI, Fumiyasu, Tokyo 162-8001 (JP); OKADA, Masato, Tokyo 162-8001 (JP); YOSHIHARA, Toshio, Tokyo 162-8001 (JP); HASEGAWA, Yasuchika, Sapporo-shi Hokkaido 060-0808 (JP); NAKANISHI, Takayuki, Sapporo-shi Hokkaido 060-0808 (JP)
(74) Representative: Müller-Boré & Partner Patentanwälte PartG mbB
(86) International application number: PCT/JP2018/021241
(87) International publication number: WO 2019/053963

(56) References cited:
- EP-A1- 2 706 081
- WO-A1-2009/110199
- WO-A1-2010/032395
- WO-A1-2015/002282
- JP-A- 2006 077 191
- JP-A- 2008 189 879
- JP-A- 2010 095 514
- JP-A- 2015 071 751
- JP-A- 2016 166 140
- JP-A- 2017 137 415
- US-A1- 2014 093 664

## Description

The disclosure relates to an authenticity determination method.

Authenticity determination and anti-counterfeit features are needed to be imparted to printed products requiring security, such as banknotes, marketable securities, passports, ID cards, stamps, coupons and various kinds of tickets, in order to prevent counterfeiting and tampering and to identify whether they are counterfeit products or authentic products.

In recent years, with the spread of electronic devices such as printers and scanners, unauthorized copying of marketable securities, etc., is rampant, and the damage of such counterfeiting is a social problem. Since counterfeiting techniques have become increasingly sophisticated, there is a need for rapid development of advanced authenticity determination and anti-counterfeiting techniques.

For example, as an advanced anti-counterfeiting technique, Patent Document 1 discloses a printed product using hologram. However, this technique is high in production cost and unsuitable for use in printed products with low unit costs. Patent Document 2 discloses a product printed with a fluorescent ink which is invisible in a visible light region and emits fluorescence by constant wavelength light other than visible light. In Patent Document 3, printing with a temperature-sensitive color changing ink is carried out as an anti-counterfeit technique.

For the printing with the fluorescent ink or the printing with the temperature-sensitive color changing ink, however, there is a problem in that it is an ineffective anti-counterfeiting printing technique, since there are advances in counterfeiting techniques and it has been widely known due to the obsolescence of the techniques.
Patent Document 1: Japanese Patent Application Laid-Open (JP-A) No. H06-278396
Patent Document 2: JP-A No. H06-297888
Patent Document 3: JP-A No. 2008-308555

There is a demand for techniques for determining the authenticity of marketable securities, etc., or anti-counterfeiting them, and imparting security marking on products for theft and fraud prevention.

Security marking by fluorescence which is, like Patent Document 2, invisible in a visible light region and emits fluorescence by constant wavelength light other than visible light, is preferred from the viewpoint of giving no damage to the appearance and design of products and items. However, since light-emitting substances, fluorescent inks and so on are relatively easily available in recent years, there is a demand for using a light-emitting substance that has light-emitting characteristics different from those of easily-available light-emitting substances. The temperature-sensitive color changing ink of Patent Document 3 is an ink configured to be transparent when the temperature is high, and configured to cause coloring when the temperature is low. An ink configured to cause a change in emitted light color itself by heat, was heretofore unknown.

The disclosed embodiments is to provide an ink composition configured to emit fluorescence by irradiation of constant wavelength light other than visible light and configured to cause a change in emitted light color by heat, and a printed product using it, an authenticity determination method.

The subject matter of the present invention is defined in the appended set of claims.

In one embodiment, there is provided an authenticity determination method wherein authenticity determination is carried out by a change in emitted light color caused by frictional heat generated by rubbing an ink layer containing a solidified product of an ink composition comprising one or two or more kinds of rare-earth complexes containing trivalent rare-earth ions and at least one organic ligand selected from a β-diketone ligand, a carboxylic acid ligand, a phosphine oxide ligand and a nitrogen-containing aromatic heterocyclic ligand,
wherein at least one selected from the following group A and at least one selected from the following group B are contained as the trivalent rare-earth ions contained in the one or two or more kinds of rare-earth complexes:
Group A: Eu³⁺, Sm³⁺, Pr³⁺ and Ho³⁺
Group B: Tb³⁺, Er³⁺, Tm³⁺, Dy³⁺, Yb³⁺, Nd³⁺, Ce³⁺ and Gd³⁺.

In another embodiment, there is provided an authenticity determination method, wherein the rare-earth complex or complexes contain a phosphine oxide ligand represented by the following general formula (1) as the organic ligand: 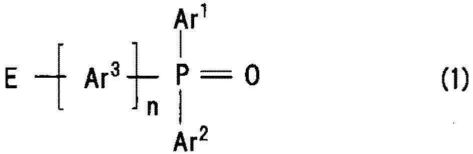
in the general formula (1), Ar¹ and Ar² are each independently a monovalent aromatic group optionally containing a substituent group; Ar³ is a divalent group represented by the following general formula (2a), (2b) or (2c); and n is 1 or 2: 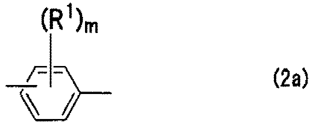 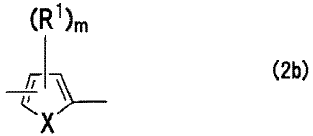 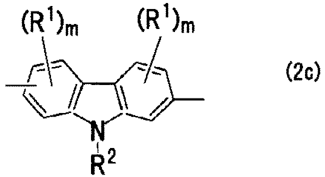
in the general formulae (2a) to (2c), R¹ is each independently a monovalent substituent group; X is a sulfur atom or an oxygen atom; R² is a hydrogen atom or a hydrocarbon group; m is an integer of from 0 to a number of substitutable sites of a ring to which R¹ is bound; and when there are a plurality of R¹s, they are optionally the same or different, and
in the general formula (1), E is a hydrogen atom or a phosphine oxide group represented by the following general formula (3): 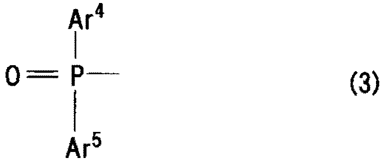
in the general formula (3), Ar⁴ and Ar⁵ are each independently a monovalent aromatic group optionally containing a substituent group.

In another embodiment, there is provided an authenticity determination method, wherein the rare-earth complex or complexes contain a phosphine oxide bidentate ligand and a crosslinked structure formed by coordinating the phosphine oxide bidentate ligand to the at least one rare-earth ion selected from the group A and the at least one rare-earth ion selected from the group B.

In another embodiment, there is provided an authenticity determination method, wherein the rare-earth complex or complexes contain a β-diketone ligand represented by the following general formula (4) as the organic ligand: 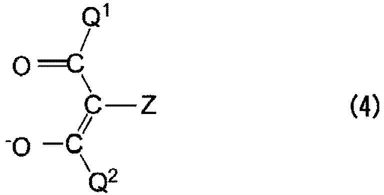 in the general formula (4), Q¹ and Q² are each independently a hydrocarbon group optionally containing a substituent group or an aromatic heterocyclic group optionally containing a substituent group, and Z is a hydrogen atom or a deuterium atom.

In another embodiment, there is provided an authenticity determination method, wherein the rare-earth complex or complexes contain Eu³⁺ and Tb³⁺ as the trivalent rare-earth ions.

In another embodiment, there is provided an authenticity determination method, wherein the rare-earth complex or complexes contain, as the trivalent rare-earth ions, 1 mol or more and 300 mol or less of Tb³⁺ with respect to 1 mol of Eu³⁺.

According to the disclosed embodiments, an authenticity determination method using an ink composition configured to emit fluorescence by irradiation of constant wavelength light other than visible light and configured to cause a change in emitted light color by heat is provided.

In the accompanying drawings,
FIG. 1 is a schematic sectional view of an example of the printed product of the disclosed embodiments;
FIG. 2 is a view showing an example of the authenticity determination method of the disclosed embodiments;
FIG. 3 is a view showing an example of the authenticity determination method of the disclosed embodiments;
FIG. 4 is a view showing a device for light emission spectrum measurement;
FIG. 5 is a view showing the light emission spectra at 25°C, 60°C and 90°C of the ink layer of the printed product of Example 1;
FIG. 6 is a view showing the light emission spectra at 25°C, 60°C and 90°C of the ink layer of the printed product of Example 2;
FIG. 7 is a view showing the light emission spectra at 25°C, 60°C and 90°C of the ink layer of the printed product of Example 3;
FIG. 8 is a view showing the light emission spectra at 25°C, 60°C and 90°C of the ink layer of the printed product of Example 4;
FIG. 9 is a view showing the light emission spectra at 25°C, 60°C and 90°C of the ink layer of the printed product of Example 5;
FIG. 10 is a view showing the light emission spectra at 25°C, 60°C and 90°C of the ink layer of the printed product of Example 6;
FIG. 11 is a view showing the light emission spectra at 25°C, 60°C and 90°C of the ink layer of the printed product of Example 7;
FIG. 12 is a view showing the light emission spectra at 25°C, 60°C and 90°C of the ink layer of the printed product of Comparative Example 1;
FIG. 13 is a view showing the light emission spectra at 25°C, 60°C and 90°C of the ink layer of the printed product of Comparative Example 2; and
FIG. 14 is a view showing the light emission spectra at 25°C, 60°C and 90°C of the ink layer of the printed product of Comparative Example 3.

The embodiments of the present disclosure are explained below while referring to the drawings and the like. However, the present disclosure can be implemented in many different aspects and is not to be interpreted as being limited to the description of the embodiments exemplified herein. In addition, in order to make the explanation clearer, although the drawings may be schematically represented in terms of the width, thickness, shape and the like of each part as compared with their actual form, they are only an example, and the interpretation of the present disclosure is not limited. In addition, in the present specification and each figure, the same reference numerals are given to the same elements as those described previously with reference to the previous figures, and a detailed explanation may be omitted as appropriate. In addition, for the purposes of explanation, although an explanation is given using the terms "upward" or "downward", the upward and downward directions may also be reversed.

In the present specification, when a certain member or region is referred to as being "above (or below)" another member or region, unless there is a specific limitation, this means not only that a part or region is directly above (or directly below) a certain part or region, but also includes the case where it is located above (or below) another member or region, that is, another component is included between another member or region.

### 1. Ink composition

The ink composition of the disclosed embodiments is an ink composition comprising one or two or more kinds of rare-earth complexes containing trivalent rare-earth ions and at least one organic ligand selected from a β-diketone ligand, a carboxylic acid ligand, a phosphine oxide ligand and a nitrogen-containing aromatic heterocyclic ligand,
wherein at least one selected from the following group A and at least one selected from the following group B are contained as the trivalent rare-earth ions contained in the one or two or more kinds of rare-earth complexes:
Group A: Eu³⁺, Sm³⁺, Pr³⁺ and Ho³⁺
Group B: Tb³⁺, Er³⁺, Tm³⁺, Dy³⁺, Yb³⁺, Nd³⁺, Ce³⁺ and Gd³⁺.

The ink composition of the disclosed embodiments is an ink composition configured to emit fluorescence by irradiation of constant wavelength light other than visible light and configured to cause a change in emitted light color by heat. The reason is not entirely clear; however, it is estimated as follows.

The ink composition of the disclosed embodiments contains one or two or more kinds of rare-earth complexes containing the above-specified organic ligand, and as the trivalent rare-earth ions contained in the one or two or more kinds of rare-earth complexes, it contains at least one selected from the above-specified group A and at least one selected from the above-specified group B.

A rare-earth complex is invisible under visible light and emits fluorescence by irradiation of constant wavelength light other than visible light. Also, a rare-earth complex causes thermal deactivation processes such as thermal vibration deactivation and inverse energy transfer to the ligand, depending on temperature. These thermal deactivation processes differ in behavior depending on the trivalent rare-earth ions or on the ligand used. Accordingly, by selecting the trivalent rare-earth ions to include at least one selected from the above-specified group A and at least one selected from the above-specified group B and combining them, the one or two or more kinds of rare-earth complexes emit light in different wavelength regions. As just described, by using the rare-earth complex or complexes containing the combination of the rare-earth ions emitting light in different wavelength regions, a difference is made in the level of change in each light emission intensity with respect to temperature. As a result, the difference between the changes in the light emission intensity when heat is applied, can be recognized as a change in the emitted light color. Also, when a plurality of rare-earth metals are linked via a polydentate ligand in a molecule, a difference can be made in the light emission intensity by activating energy transfer between the different metals via the ligand by temperature.

Accordingly, by containing, as the trivalent rare-earth ions, one or two or more kinds of rare-earth complexes including at least one selected from the above-specified group A, at least one selected from the above-specified group B, and the above-specified organic ligand, they become the ink composition configured to cause a change in emitted light color by heat.

The ink layer containing a solidified product of the ink composition that causes a change in emitted light color by heat, causes a change in emitted light color by heating the ink layer or frictional heat generated by rubbing the ink layer. Accordingly, due to the unique light emission behavior, the ink composition is high in authenticity determination properties, anticounterfeiting properties, and it is widely applicable for imparting security marking.

In the disclosed embodiments, "cause a change in emitted light color by heat" may indicate that the difference between the light emission intensities in the different wavelength regions is controllable by heat. The wavelength of the emitted light color is not always necessary to be a wavelength in the visible light region, and it may be a wavelength corresponding to the near infrared region or the near ultraviolet region. For example, when the wavelength of the emitted light color getting stronger include a wavelength corresponding to a region other than the visible light region, such as the near infrared region or the near ultraviolet region, a detector that can detect light in the wavelength region can be appropriately used.

Due to the organic ligand, a fluorescent substance using the above-specified one or two or more kinds of rare-earth complexes has high excitation light absorption efficiency, can efficiently utilize excitation light, and has high light emission intensity compared to inorganic fluorescent substances. In addition, since the fluorescent substance using the above-specified one or two or more kinds of rare-earth complexes is excellent in solubility in organic solvent, dispersibility in medium, and compatibility with resin, there are the following advantages: the ease of preparation of a desired ink composition, the ease of formation of a desired ink layer, and the ease of application to various kinds of security marking.

As the excitation light of the above-specified one or two or more kinds of rare-earth complexes, examples include electromagnetic waves other than visible light, such as ultraviolet light and infrared light.

The ink composition of the disclosed embodiment contains the above-specified one or two or more kinds of rare-earth complexes. As needed, the ink composition may further contain other components, as long as the effects of the disclosed embodiments are not impaired.

Hereinafter, the components of the ink composition will be described in detail.

### <The above-specified one or two or more kinds of rare-earth complexes>

### (Rare-earth ions)

The one or two or more kinds of rare-earth complexes used in the ink composition of the disclosed embodiments, contain at least one selected from the following group A and at least one selected from the following group B as the trivalent rare-earth ions:
Group A: Eu³⁺, Sm³⁺, Pr³⁺ and Ho³⁺
Group B: Tb³⁺, Er³⁺, Tm³⁺, Dy³⁺, Yb³⁺, Nd³⁺, Ce³⁺ and Gd³⁺.

The absolute value of the difference between the wavelength (λ1) at which the light emission intensity of the rare-earth complex or complexes containing the rare-earth ion of the group A is maximum and the wavelength (λ2) at which the light emission intensity of the rare-earth complex or complexes containing the rare-earth ion of the group B is maximum, is 50 nm or more.

Accordingly, the difference between the changes in the light emission intensity when heated, can be recognized as the change in the emitted light color. When the wavelength of the emitted light color include a wavelength corresponding to a region other than the visible light region, such as the near infrared region or the near ultraviolet region, the change in the emitted light color can be recognized by, as described above, appropriately using the detector that can detect light in the wavelength region.

The emitted light color before and after heating can be controlled by appropriately changing the ratio of the rare-earth ion of the group A to the rare-earth ion of the group B. For example, with respect to 1 mol of the rare-earth ion of the group A, 1 mol or more and 300 mol or less of the rare-earth ion of the group B may be contained.

In particular, the rare-earth complex or complexes preferably contain Eu³⁺ and Tb³⁺ as the trivalent rare-earth ions, from the point of view that the difference between the changes in the light emission intensity when heated, is large, and the visibility of the change in the emitted light color is high. Since the metal-ligand inverse energy transfer property of Tb³⁺ is remarkable, the visibility of the change in the emitted light color easily becomes high when Tb³⁺ is contained.

In particular, when the rare-earth complex or complexes contain Eu³⁺ and Tb³⁺ as the trivalent rare-earth ions, the rare-earth complex or complexes preferably contain 1 mol or more and 300 mol or less of Tb³⁺ with respect to 1 mol of Eu³⁺, from the point of view that the visibility of the change in the emitted light color is increased.

### (Organic ligand)

As the ligand coordinated to the trivalent rare-earth ions, at least one organic ligand selected from a β-diketone ligand, a carboxylic acid ligand, a phosphine oxide ligand and a nitrogen-containing aromatic heterocyclic ligand, is contained.

In general, the excitation light absorbed by the rare-earth complex or complexes is passed from the ligand to the rare-earth ion and converted into light-emitting light energy. Since the rare-earth complex or complexes contain the above-described organic ligand, the light energy of the excitation light absorbed by the rare-earth complex or complexes can be efficiently supplied to the rare-earth ion, and in the rare-earth ion, the energy of the supplied light can be converted into the light-emitting light energy with high efficiency.

As the ligand coordinated to the trivalent rare-earth ions, a ligand different from at least one organic ligand selected from a β-diketone ligand, a carboxylic acid ligand, a phosphine oxide ligand and a nitrogen-containing aromatic heterocyclic ligand, may be contained as long as the effects of the disclosed embodiments are not impaired.

From the viewpoint of the stability of the complex, the organic ligand preferably contains an anionic ligand, and it more preferably contains at least one of a β-diketone ligand and a carboxylic acid ligand. Of them, a β-diketone ligand is preferred since, due to its high absorption coefficient, the energy of the excitation light can be efficiently supplied to the coordinated rare-earth ion, and the light emission intensity is increased.

From the viewpoint of increasing the light emission intensity, the organic ligand preferably contains at least one of the nitrogen-containing aromatic heterocyclic ligand and the phosphine oxide ligand, which are neutral ligands. Since the nitrogen-containing aromatic heterocyclic ligand has a high absorption coefficient, the energy of the excitation light can be efficiently supplied to the coordinated rare-earth ion, and the light emission intensity is increased. Since the phosphine oxide ligand contains a low-vibration P=O framework, it functions to prevent the vibrational deactivation of energy received by the coordinated rare-earth ion. When a low-vibration framework is contained, thermal deactivation at the time of light energy conversion is suppressed. Accordingly, the light emission efficiency is increased, and the light emission intensity is increased.

The carbon atom substituted with a halogen atom, such as a C-X bond (where X is a halogen atom; F, Cl, Br and I), contains a low-vibration framework (a C-X bond). Accordingly, as with the above, the light emission efficiency is increased, and the light emission intensity is increased. As the low-vibration framework, examples include a perhalogenated alkyl group such as a trifluoromethyl group.

From the above reasons, it is preferable that as the organic ligand, at least one anionic ligand of a β-diketone ligand and a carboxylic acid ligand, and at least one of a phosphine oxide ligand and a nitrogen-containing aromatic heterocyclic ligand are contained. In particular, it is preferable that at least one anionic ligand of a β-diketone ligand and at least one of a phosphine oxide ligand and a nitrogen-containing aromatic heterocyclic ligand are contained. It is more preferable that the carbon atom substituted with a halogen atom is further contained in the organic ligand of these combinations.

As the β-diketone ligand, examples include a β-diketone ligand represented by the following general formula (4): 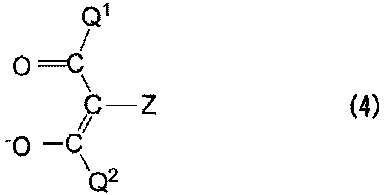 in the general formula (4), Q¹ and Q² are each independently a hydrocarbon group optionally containing a substituent group or an aromatic heterocyclic group optionally containing a substituent group, and Z is a hydrogen atom or a deuterium atom.

As the hydrocarbon group as Q¹ and Q² in the general formula (4), examples include an aromatic hydrocarbon group, an aliphatic hydrocarbon group and a combination thereof. As the aliphatic hydrocarbon group, examples include a saturated or unsaturated, straight, branched or cyclic aliphatic hydrocarbon group.

As the aromatic hydrocarbon group, examples include, but are not limited to, an aromatic hydrocarbon group containing 6 to 22 carbon atoms, and further an aromatic hydrocarbon group containing 6 to 14 carbon atoms, such as a phenyl group, a naphthyl group, a biphenyl group, a phenanthryl group and a dibenzo[c,g]phenanthryl group.

When the aliphatic hydrocarbon group is a saturated linear, branched or cyclic aliphatic hydrocarbon group, examples include a saturated linear, branched or cyclic aliphatic hydrocarbon group containing 1 to 20 carbon atoms, and further a saturated linear, branched or cyclic aliphatic hydrocarbon group containing 1 to 10 carbon atoms. As the saturated linear, branched or cyclic aliphatic hydrocarbon groups, examples include, but are not limited to, alkyl and cycloalkyl groups such as a methyl group, an ethyl group, a propyl group, a butyl group, a pentyl group, a hexyl group, an octyl group, an isopropyl group, a tert-butyl group, a 2-ethylhexyl group, a cyclopentyl group, a cyclohexyl group and a cyclooctyl group.

When the aliphatic hydrocarbon group is an unsaturated linear, branched or cyclic aliphatic hydrocarbon group, examples include an unsaturated linear, branched or cyclic aliphatic hydrocarbon group containing 2 to 20 carbon atoms, and further an unsaturated linear, branched or cyclic aliphatic hydrocarbon group containing 2 to 10 carbon atoms. As the unsaturated linear, branched or cyclic aliphatic hydrocarbon groups, examples include, but are not limited to, alkenyl, cycloalkenyl and alkynyl groups such as a vinyl group, an allyl group, a butenyl group, a pentenyl group, a hexenyl group, an octenyl group, a decenyl group, an isopropenyl group, an isobutenyl group, an isopentenyl group, a 2-ethylhexenyl group, a cyclopentenyl group, a cyclohexenyl group, an ethynyl group, a propynyl group and a butynyl group.

As the combination of the aromatic and aliphatic hydrocarbon groups, examples include, but are not limited to, aralkyl groups such as a benzyl group, a phenethyl group, a naphthylmethyl group and a biphenylmethyl group.

As the aromatic heterocyclic group as Q¹ and Q², examples include, but are not limited to, an aromatic heterocyclic group containing 2 to 20 carbon atoms forming a ring and containing at least one heteroatom selected from O (an oxygen atom), S (a sulfur atom), N (a nitrogen atom), further an aromatic heterocyclic group containing 2 to 10 carbon atoms forming a ring, and further a 4- to 7-membered, aromatic heterocyclic group. As the aromatic heterocyclic groups, examples include, but are not limited to, a pyridyl group, a thienyl group, a furyl group, a pyrazolyl group, an imidazolyl group, a benzofuranyl group, and a quinolyl group.

As needed, the hydrocarbon group and the aromatic heterocyclic group may contain a substituent group such as a deuterium atom, a halogen atom (F, Cl, Br and I), a hydroxyl group, a nitro group, an amino group, a sulfonyl group, a cyano group, a silyl group, a phosphonic acid group, a diazo group and a mercapto group. Also, the hydrocarbon group and the aromatic heterocyclic group may contain a substituent group such as an alkoxy group containing 1 to 10 carbon atoms, an alkoxycarbonyl group containing 1 to 10 carbon atoms, an alkylcarbonyl group containing 1 to 10 carbon atoms, and an alkylcarbonyloxy group containing 1 to 10 carbon atoms.

Also, the aromatic hydrocarbon group and the aromatic heterocyclic group may be substituted with an alkyl group containing to 10 carbon atoms, an alkyl halide group containing 1 to 10 carbon atoms.

In particular, when a halogen atom is contained as a substituent group and a C-X bond (where X is a halogen atom; F, Cl, Br and I) is contained, a low-vibration framework is obtained. Accordingly, it is preferable to contain the structure from the point of view that it functions to prevent the vibrational deactivation of the energy received by the rare-earth metal, increase light emission efficiency and increase light emission intensity.

Q¹ and Q² are each independently preferably one or more selected from the group consisting of an aliphatic hydrocarbon group containing 1 to 20 carbon atoms, a perhalogenated aliphatic hydrocarbon group containing 1 to 20 carbon atoms, an aromatic hydrocarbon group containing 6 to 22 carbon atoms, a perhalogenated aromatic hydrocarbon group containing 6 to 22 carbon atoms, an aromatic heterocyclic group containing 2 to 10 carbon atoms forming a ring, and a perhalogenated aromatic heterocyclic group containing 2 to 10 carbon atoms forming a ring, and more preferably one or more selected from the group consisting of an aliphatic hydrocarbon group containing 3 to 6 carbon atoms, a perhalogenated aliphatic hydrocarbon group containing 1 to 20 carbon atoms, an aromatic hydrocarbon group containing 6 to 22 carbon atoms, and an aromatic heterocyclic group containing 2 to 10 carbon atoms forming a ring.

Z in the general formula (4) may be a hydrogen atom H or a deuterium atom D. Z is preferably a hydrogen atom H. A deuterium substitution reaction is caused by the action of a deuterating agent on the rare-earth metal complex in which Z is H, thereby obtaining a deuterated complex (a complex in which Z is a deuterium atom D).

The deuterating agent contains, for example, a deuterium-containing protic compound, more specifically, deuterated water; deuterated alcohol such as deuterated methanol and deuterated ethanol; deuterated chloride; and deuterated alkali. To promote the deuterium substitution reaction, a base agent such as trimethylamine and triethylamine and additives may be added.

As the β-diketone ligand, examples include, but are not limited to, a ligand derived from β-diketone such as hexafluoroacetylacetone, dibenzoylmethane, 2,2,6,6-tetramethyl-3,5-heptanedione, 4,4,4-trifluoro-1-(2-thienyl)-1,3-butanedione, 4,4,4-trifluoro-1-(2-furanyl)-1,3-butanedione, 4,4,4-trifluoro-1-(3-pyridyl)-1,3-butanedione, 4,4,4-trifluoro-1-phenyl-1,3-butanedione, 4,4,4-trifluoro-1-{5-(2-methylthienyl)}-1,3-butanedione, 4,4,4-trifluoro-1-(2-naphthyl)-1,3-butanedione, and 2,2-dimethyl-6,6,7,7,8,8,8-heptafluoro-3,5-octanedione.

As the carboxylic acid ligand, examples include, but are not limited to, a ligand containing a carboxylate group (-COO⁻), such as a formic acid (formate) ligand, an acetic acid (acetate) ligand, a propionic acid (propionate) ligand, a citric acid ligand, a salicylic acid ligand, a terephthalic acid ligand, an isophthalic acid ligand, a 2-hydroxyterephthalic acid ligand, a 1,4-naphthalenedicarboxylic acid ligand, a trimesic acid ligand, a 1,3,5-tris(4-carboxyphenyl)benzene ligand and a biphenyl-3,3',5,5'-tetracarboxylic acid ligand.

As the phosphine oxide ligand, examples include a phosphine oxide ligand represented by the following general formula (5): 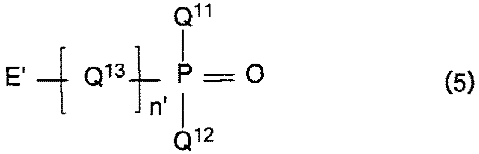 in the general formula (5), Q¹¹ and Q¹² are each independently a hydrocarbon group optionally containing a substituent group or an aromatic heterocyclic group optionally containing a substituent group; Q¹³ is a divalent organic group; and n' is an integer of from 1 to 20.

In the general formula (1'), E' is a hydrogen atom or a phosphine oxide group represented by the following general formula (6): 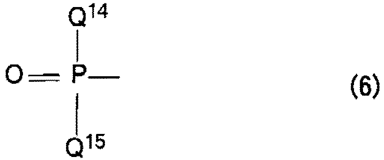 in the general formula (6), Q¹⁴ and Q¹⁵ are each independently a hydrocarbon group optionally containing a substituent group or an aromatic heterocyclic group optionally containing a substituent group.

Q¹¹ and Q¹² in the general formula (5) and Q¹⁴ and Q¹⁵ in the general formula (6) are each independently a hydrocarbon group optionally containing a substituent group or an aromatic heterocyclic group optionally containing a substituent group.

The hydrocarbon group optionally containing a substituent group or the aromatic heterocyclic group optionally containing a substituent group may be the same as the hydrocarbon group optionally containing a substituent group or the aromatic heterocyclic group optionally containing a substituent group as Q¹ and Q² represented in the general formula (4).

Q¹¹ and Q¹², and Q¹⁴ and Q¹⁵ are each independently preferably at least one selected from the group consisting of an aliphatic hydrocarbon group containing 1 to 20 carbon atoms, a perhalogenated aliphatic hydrocarbon group containing 1 to 20 carbon atoms, an aromatic hydrocarbon group, a perhalogenated aromatic hydrocarbon group, an aromatic heterocyclic group and a perhalogenated aromatic heterocyclic group, and preferably at least one selected from the group consisting of an aliphatic hydrocarbon group containing 1 to 6 carbon atoms, a perhalogenated aliphatic hydrocarbon group containing 1 to 6 carbon atoms, an aromatic hydrocarbon group containing 6 to 22 carbon atoms, and an aromatic heterocyclic group containing 2 to 10 carbon atoms forming a ring.

Q¹³ in the general formula (5) is a divalent organic group. The divalent organic group is a group containing at least a carbon atom, is not particularly limited, and may be a group in which a plurality of groups are bound to each other. As Q¹³, examples include, but are not limited to, a divalent unsaturated group, a divalent aromatic group, an oxyalkylene group and combinations thereof, and another group may be further bound to these groups. Q¹³ may be a group composed of a plurality of these divalent groups bound to each other, or a group having a polymer structure.

The divalent organic group in Q¹³ in the general formula (5) is preferably a group containing at least one aromatic ring, from the viewpoint of excellent heat resistance, and more preferably a group containing a plurality of aromatic rings.

Q¹³ in the general formula (5) is preferably a divalent group represented by the following general formula (2a), (2b) or (2c) described below, from the viewpoint of excellent heat resistance.

As the divalent unsaturated group, examples include an alkenylene group such as a vinylene group.

As the divalent aromatic group, examples include a divalent aromatic hydrocarbon group and a divalent aromatic heterocyclic group. As the divalent aromatic hydrocarbon group and the divalent aromatic heterocyclic group, examples include a group having two bonds obtained by removing one hydrogen atom further from a monovalent aromatic hydrocarbon group and a monovalent aromatic heterocyclic group in Q¹ and Q² represented in the general formula (4). As the aromatic ring contained in the divalent aromatic group, a benzene ring, a thiophene ring, a pyridine ring, a carbazole ring or the like is preferably used.

As the oxyalkylene group, examples include, but are not limited to, an oxymethylene group. As the group composed of a plurality of these divalent groups bound to each other, examples include, but are not limited to, a group in which two or more aromatic rings are bound to each other, and a group composed of polyethylene dioxythiophene (PEDOT) bound to a phosphorus atom at both terminals thereof.

As the substituent group that Q¹¹, Q¹² and Q¹³ in the general formula (5) and Q¹⁴ and Q¹⁵ in the general formula (6) optionally contain, examples include, but are not limited to, a hydrocarbon group containing 1 to 20 carbon atoms, a hydroxyl group, a nitro group, an amino group, a sulfonyl group, a cyano group, a silyl group, a phosphonic acid group, a diazo group and a mercapto group. The hydrocarbon group containing 1 to 20 carbon atoms as the substituent group, is preferably an aliphatic hydrocarbon group, and more preferably an aliphatic hydrocarbon group containing 1 to 10 carbon atoms.

When E' in the general formula (5) is the phosphine oxide group represented by the general formula (6), the phosphine oxide ligand represented by the general formula (5) becomes a bidentate ligand, and a rare-earth complex containing a crosslinked structure formed by coordinating the phosphine oxide ligand to the two rare-earth ions, can be formed. Hereinafter, the rare-earth complex containing the crosslinked structure may be referred to as "complex polymer". In this case, the two rare-earth ions to which the phosphine oxide bidentate ligand is coordinated, may be the same or different, may be two of at least one rare-earth ion selected from the group A, may be two of at least one rare-earth ion selected from the group B, may be one of at least one rare-earth ion selected from the group A and one of at least one rare-earth ion selected from the group B.

From the viewpoint of high heat resistance, the phosphine oxide ligand is preferably a phosphine oxide ligand represented by the following general formula (1), among the phosphine oxide ligands represented by the general formula (5): 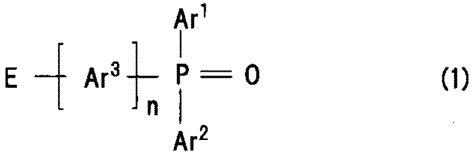
in the general formula (1), Ar¹ and Ar² are each independently a monovalent aromatic group optionally containing a substituent group; Ar³ is a divalent group represented by the following general formula (2a), (2b) or (2c); and n is 1 or 2: 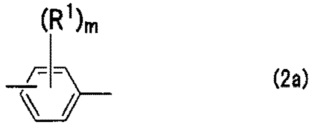 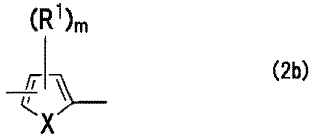 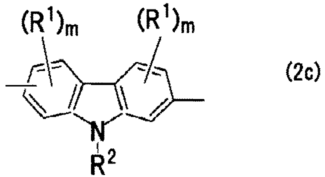
in the general formulae (2a) to (2c), R¹ is each independently a monovalent substituent group; X is a sulfur atom or an oxygen atom; R² is a hydrogen atom or a hydrocarbon group; m is an integer of from 0 to a number of substitutable sites of a ring to which R¹ is bound; and when there are a plurality of R¹s, they are optionally the same or different, and
in the general formula (1), E is a hydrogen atom or a phosphine oxide group represented by the following general formula (3): 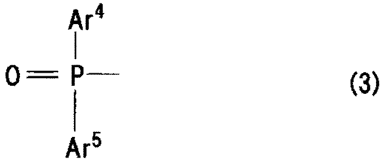
in the general formula (3), Ar⁴ and Ar⁵ are each independently a monovalent aromatic group optionally containing a substituent group.

Ar¹ and Ar² in the general formula (1) and Ar⁴ and Ar⁵ in the general formula (3) are each independently a monovalent aromatic group optionally containing a substituent group.

As the aromatic group, examples include an aromatic hydrocarbon group and an aromatic heterocyclic group. The aromatic hydrocarbon group and the aromatic heterocyclic group may be the same as the aromatic hydrocarbon group and the aromatic heterocyclic group in Q¹ and Q² represented in the general formula (4).

As the aromatic group of Ar¹ and Ar² in the general formula (1) and Ar⁴ and Ar⁵ in the general formula (3), in particular, examples include, but are not limited to, a phenyl group, a naphthyl group, a biphenyl group, a phenanthryl group, a dibenzo[c,g]phenanthryl group, a pyridyl group and a thienyl group. As the aromatic group of Ar¹ and Ar² in the general formula (1) and Ar⁴ and Ar⁵ in the general formula (3), a phenyl group, a pyridyl group or a thienyl group is preferred, and a phenyl group is particularly preferred.

As the substituent group that Ar¹ and Ar² in the general formula (1) and Ar⁴ and Ar⁵ in the general formula (3) optionally contain, and as the monovalent substituent group as R¹, examples include, but are not limited to, a hydrocarbon group containing 1 to 20 carbon atoms, a hydroxyl group, a nitro group, an amino group, a sulfonyl group, a cyano group, a silyl group, a phosphonic acid group, a diazo group, and a mercapto group.

R² in the general formula (1) is a hydrogen atom or a hydrocarbon group. As the hydrocarbon group, examples include an aliphatic hydrocarbon group and an aromatic hydrocarbon group. These hydrocarbon groups may be the same as the hydrocarbon group in Q¹ and Q² in the general formula (4). The hydrocarbon group of R² in the general formula (1) is preferably at least one selected from the group consisting of a phenyl group and an aliphatic hydrocarbon group containing 1 to 10 carbon atoms.

In the general formulae (2a), (2b) and (2c), m is an integer of from 0 to a number of substitutable sites of a ring to which R¹ is bound. In particular, m is preferably an integer of from 0 to 2, and more preferably 0.

In the general formula (1), n is 1 or 2. When Ar³ is a divalent group represented by the general formula (2c), n is preferably 1.

In the general formula (1), E is a hydrogen atom or a phosphine oxide group represented by the general formula (3). When E in the general formula (1) is the phosphine oxide group represented by the general formula (3), the phosphine oxide ligand represented by the general formula (1) becomes a bidentate ligand, and a rare-earth complex containing a crosslinked structure formed by coordinating the phosphine oxide bidentate ligand to the two rare-earth ions, can be formed.

As a nitrogen-containing aromatic heterocyclic compound constituting the nitrogen-containing aromatic heterocyclic ligand, a ring assembly compound, a condensed ring compound are included besides a monocyclic compound. The number of atoms constituting the aromatic ring is generally from 5 to 30, and preferably from 5 to 18. From the viewpoint of availability and excellent performance, one containing 6 to 10 atoms is particularly preferred.

As the nitrogen-containing aromatic heterocyclic compound, examples include, but are not limited to, pyridine, 2-methylpyridine, 2,4,6-trimethylpyridine, 4-dimethylaminopyridine, 2,6-lutidine, pyrimidine, pyridazine, pyrazine, oxazole, isooxazole, thiazole, isothiazole, imidazole, 1,2-dimethylimidazole, 3-(dimethylamino)propylimidazole, pyrazole, furazan, pyrazine, quinoline, isoquinoline, purine, 1H-indazole, quinazoline, cinnoline, quinoxaline, phthalazine, pteridine, phenanthridine, 2,6-di-t-butylpyridine, 2,2'-bipyridine, 4,4'-dimethyl-2,2'-bipyridyl, 4,4'-dimethyl-2,2'-bipyridyl, 5,5'-dimethyl-2,2'-bipyridyl, 6,6'-t-butyl-2,2'-dipyridyl, 4,4'-diphenyl-2,2'-bipyridyl, 1,10-phenanthroline, 2,7-dimethyl-1,10-phenanthroline, 5,6-dimethyl-1,10-phenanthroline, and 4,7-diphenyl-1,10-phenanthroline. As the nitrogen-containing aromatic heterocyclic compound, in particular, phenanthrolines and pyridines that become the bidentate ligand are preferably used, such as 1,10-phenanthroline, 2-2'-bipyridyl, 2-2'-6,2"-terpyridyl, 2,7-dimethyl-1,10-phenanthroline, 5,6-dimethyl-1,10-phenanthroline, 4,7-diphenyl-1,10-phenanthroline, and 2-(2-pyridyl)benzimidazole.

The rare-earth complex or complexes preferably contain a phosphine oxide bidentate ligand and a crosslinked structure formed by coordinating the phosphine oxide bidentate ligand to the at least one rare-earth ion selected from the group A and the at least one rare-earth ion selected from the group B. When such a crosslinked structure is contained, the light emission intensity is increased, and the energy transfer between the metals via the bidentate ligand is activated by temperature, whereby a difference in the light emission intensity is likely to be made, and a color difference in the emitted light color is likely to be remarkable.

The case where the rare-earth complex or complexes contain a phosphine oxide bidentate ligand and the phosphine oxide bidentate ligand is a phosphine oxide bidentate ligand represented by the general formula (1) where E is the phosphine oxide group represented by the general formula (3), is more preferred from the viewpoint of excellent light resistance and excellent solvent resistance. Since conventional rare-earth complexes with high light emission intensity are soluble in solvents, they have problems in that poor solvent resistance is obtained when they are formed into an ink composition or printed product, and they are not suitable for the purpose of security of medical management labels, etc., which are used in scenes such as a medical setting where alcohols and organic solvents are used. In addition, they have the following problem: since security printed products are required to prevent counterfeiting using solvents, conventional rare-earth complexes are unsuitable from the viewpoint of prevention of counterfeiting. Meanwhile, since the rare-earth complex or complexes containing the phosphine oxide bidentate ligand represented by the general formula (1) where E is the phosphine oxide group represented by the general formula (3), are insoluble in alcohols such as methanol and ethanol and organic solvents such as acetone, ethyl acetate, hexane and dichloromethane, the ink composition that contains the rare-earth complex or complexes containing the bidentate phosphine oxide ligand, obtains high solvent resistance when it is formed into a printed product; it is usable for the purpose of security in scenes where organic solvents are used; and it prevents counterfeiting using solvents.

As the at least one rare-earth complex preferred from the viewpoint of excellent light emission intensity, examples include at least one of a rare-earth complex containing a repeating unit represented by the following general formula (7) and a rare-earth complex represented by the following general formula (8). Of them, when the rare-earth complex containing a repeating unit represented by the following general formula (7) is contained, a printed product with excellent heat resistance, light resistance and solvent resistance can be produced.

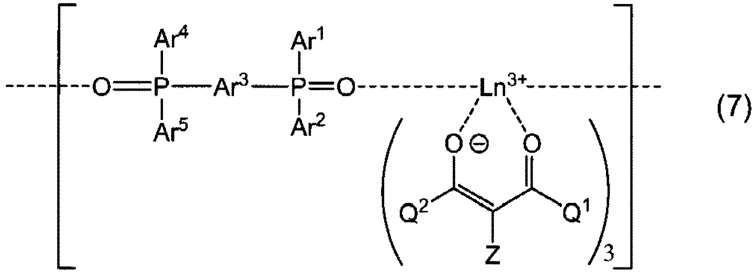

In the general formula (7), Ln³⁺ is a trivalent rare-earth ion and is at least one selected from the group A and the group B; Ar¹, Ar² and Ar³ are the same as the general formula (1); Ar⁴ and Ar⁵ are the same as the general formula (3); Q¹, Q² and Z are the same as the general formula (4); a plurality of Ar¹, Ar², Ar³, Ar⁴ and Ar⁵, and Ln³⁺, Q¹, Q² and Z may be the same or different.

When Ln³⁺ of the general formula (7) contains at least one rare-earth ion selected from the group A and at least one rare-earth ion selected from the group B, it contains a crosslinked structure formed by coordinating the phosphine oxide bidentate ligand in the general formula (7) to the at least one rare-earth ion selected from the group A and the at least one rare-earth ion selected from the group B. This is preferred from the point of view that a difference in the light emission intensity is likely to be made, and the color change of the emitted light color is likely to be remarkable.

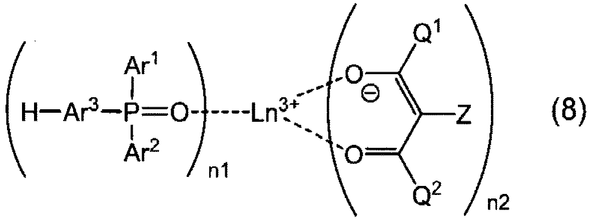

In the general formula (8), Ln³⁺ is a trivalent rare-earth ion and is one kind selected from the group A and the group B; Ar¹, Ar² and Ar³ are the same as the general formula (1); Q¹, Q² and Z are the same as the general formula (4): n1 is an integer of from 1 to 5; and n2 is an integer of from 1 to 4.

In the general formula (8), from the viewpoint of increasing light emission intensity, n1 is preferably 1 or 2, and n2 is preferably 2, 3 or 4. It is particularly preferable that n1 is 2 and n2 is 3.

The rare-earth complex or complexes can be synthesized by the following method, for example: a rare-earth metal compound, which is a raw material for the rare-earth ion, and a compound to be formed into the ligand are mixed in a solvent capable of dissolving or dispersing them, in the presence of a catalyst, as needed, thereby synthesizing the rare-earth complex. As the solvent, a mixture of solvents that are suitable for the rare-earth metal compound and for the compound to be formed into the ligand, may be used. For example, a mixed solvent of dichloromethane and methanol may be used. As the catalyst, for example, trimethylamine, lithium hydroxide, etc., may be added as needed.

### <Other components>

As needed, the ink composition may further contain other components, without impairing the effects of the disclosed embodiments.

As the other components, examples include, but are not limited to, a vehicle, known assistant agents used in ink and printing, such as a dispersant, a crosslinking agent, a drying promoter, a polymerization inhibitor, a wax, an extender pigment, a colorant, a drying inhibitor, an antioxidant, a smoothing aid, an anti-offset agent, a defoaming agent or a surfactant.

### (Vehicle)

A vehicle is a medium capable of forming a coating film when the rare-earth complex or complexes are dispersed and used for coating or printing. The vehicle used in the disclosed embodiments may contain known vehicle components used in ink, such as a resin, a solvent and a photocurable component.

The resin contained in the vehicle may be appropriately selected from known resins and used. For example, a known resin used in ink may be used, or a resin contained in an oil-based ink or UV ink may be used.

The resin may be a natural resin or a synthetic resin, and it may be a homopolymer or a copolymer. To secure the viscosity of the oil-based ink, the resin is preferably a solid. As the natural resin, examples include, but are not limited to, rosin, amber, shellac and gilsonite.

As the synthetic resin, examples include, but are not limited to, rosin, a phenolic resin, a modified alkyd resin, a polyester resin, a petroleum resin, a maleic acid resin (e.g., a rosin-modified maleic acid resin), a cyclized rubber, an acrylic resin, a one-component urethane resin, a two-component urethane resin, and other synthetic resins.

In the case of a water-based ink, for example, a watersoluble resin, a colloidal dispersion resin, an emulsion resin or the like may be contained.

The above-mentioned resins may be used solely or in combination of two or more kinds.

The solvent contained in the vehicle may be appropriately selected from known solvents and used.

As the solvent, examples include, but are not limited to, an organic solvent, a drying oil, a semidrying oil, a mineral oil and water.

The photocurable component contained in the vehicle may be appropriately selected from known photocurable components and used. The photocurable component contains a monomer, an oligomer, a photopolymerization initiator, etc.

As the monomer, examples include a compound containing an ethylenically unsaturated bond, which has been used for photopolymerization. The oligomer can be obtained by oligomerizing a compound containing an ethylenically unsaturated bond.

As the compound containing an ethylenically unsaturated bond, examples include, but are not limited to, a (meth)acrylic acid-based compound; a maleic acid-based compound; and a compound containing an ethylenically unsaturated double bond modified with a urethane-, epoxy-, polyester-, polyol- or vegetable oil-based compound.

The photopolymerization initiator is a compound capable of producing a radical (e.g., active oxygen) by UV irradiation, for example. The photopolymerization initiator may be appropriately selected from known photopolymerization initiators used for printing and then may be incorporated.

In the ink composition of the disclosed embodiments, the total content ratio of the rare-earth complex or complexes with respect to the total solid content of the ink composition, is preferably 1% by mass or more, more preferably 3% by mass or more, and even more preferably 5% by mass or more, from the viewpoint of light emission intensity. From the viewpoint of ease of ink layer formation, when the above-mentioned other components are contained, the total content ratio of the rare-earth complex or complexes is preferably 60% by mass or less, more preferably 50% by mass or less, and even more preferably 40% by mass or less. In the disclosed embodiments, the "solid content" means components other than the solvent.

When the ink composition of the disclosed embodiments contains the above-mentioned other components, the ratio of the solid content derived from the above-mentioned other components with respect to the total solid content of the ink composition, is preferably 99% by mass or less, more preferably 97% by mass or less, and even more preferably 95% by mass or less, from the viewpoint of light emission intensity.

When the ink composition of the disclosed embodiments contains the solvent, the ratio of the solvent with respect to the total amount of the ink composition containing the solvent, is appropriately controlled depending on a printing method, and is not particularly limited. From the viewpoint of printing properties, it is preferably 5% by mass or more and 80% by mass or less, and more preferably 10% by mass or more and 60% by mass or less.

### <Method for producing ink composition>

The method for producing the ink composition of the disclosed embodiments is not particularly limited, as long as it is a method by which the above-described ink composition of the disclosed embodiments is obtained. The ink composition can be produced by mixing the rare-earth complex or complexes and the other components such as the vehicle in a desired order and dispersing them. The mixing and dispersion of the components may be carried out by, for example, a mixer such as a uniaxial mixer and a biaxial mixer, or an ink mill such as a three-roller mill, a beads mill, a ball mill, a sand grinder and an attritor.

### <Applications of ink composition>

The ink composition of the disclosed embodiments is invisible in visible light, emits fluorescence by irradiation with excitation light other than visible light, and causes a change in emitted light color by heat. Accordingly, due to its unique light emission characteristics, it is preferably used for authenticity determination purposes, anti-counterfeiting purposes, and various kinds of security purposes.

### 2. Printed product

The printed product of the disclosed embodiments is a printed product comprising an ink layer containing a solidified product of the ink composition of the disclosed embodiments.

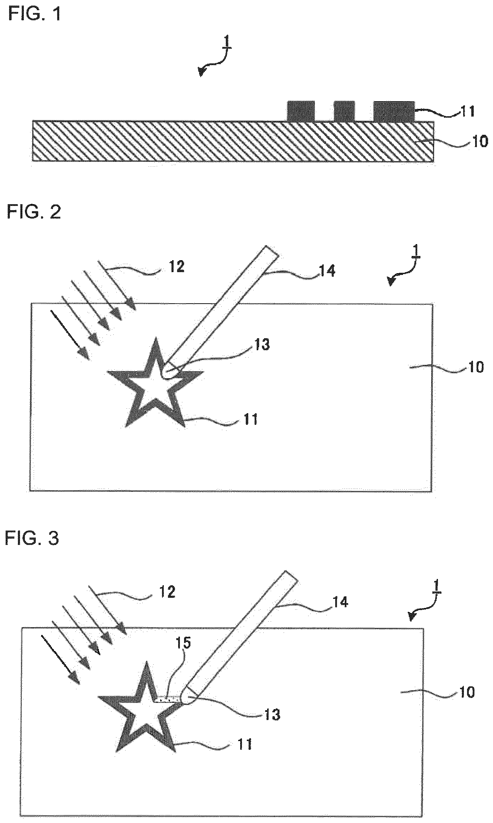

FIG. 1 is a schematic sectional view of an example of the printed product of the disclosed embodiments. A printed product 1 comprises an ink layer 11 on one surface of a substrate 10. The ink layer 11 is a layer containing a solidified product of the ink composition of the disclosed embodiments, and it is formed by use of the ink composition of the disclosed embodiments.

The printed product 1 of the disclosed embodiments may comprise one or more ink layers 11. When a plurality of ink layers 11 are disposed on the substrate 10, the compositions of the ink compositions forming the ink layers may be the same or different. The ink layer 11 may have a desired pattern.

The printed product of the disclosed embodiments comprises at least the ink layer. As needed, it may further comprise a substrate for supporting the ink layer, and other layers, as long as the effect of the disclosed embodiments are not impaired.

### <Ink layer>

The ink layer of the printed product of the disclosed embodiments is the ink layer containing the solidified product of the ink composition of the disclosed embodiments. That is, it is the ink layer formed with the ink composition of the disclosed embodiments.

The ink composition of the disclosed embodiments will not be described here, since it is as described above.

In the disclosed embodiments, the "solidified product" means a product solidified through or not through a chemical reaction. As the solidified product, examples include, but are not limited to, a cured product cured by a curing reaction, a product solidified by drying, and a product solidified by cooling a thermoplastic resin.

The ink layer can be formed by applying the ink composition of the disclosed embodiments on a substrate serving as a support and solidifying the applied ink composition.

The ink composition can be applied by a known applying method such as, but not limited to, flexographic printing, letterpress printing, offset printing, intaglio printing, gravure printing, screen printing or inkjet printing, or by a common coating method such as spin coating, casting, microgravure coating, gravure coating, bar coating, roll coating, wire bar coating, dip coating or spray coating.

Of these printing methods, silk screen printing, gravure printing, intaglio printing or offset printing is preferred in order to prevent the counterfeiting of the printed product.

The method for solidifying the ink composition is appropriately selected depending on the components contained in the ink composition and is not particularly limited. As the solidifying method, examples include, but are not limited to, the following methods: when the ink composition contains a solvent, the method of removing the solvent by drying; when the ink composition contains a photocurable component, the method of curing the photocurable component by light irradiation; when the ink composition contains a heat-curable component, the method of drying the heat-curable component by heating; when the ink composition contains a thermosetting resin, the method of dissolving the thermosetting resin in a solvent and then removing the solvent, or the method of melting the thermosetting resin and solidifying the melted resin by cooling; and combinations thereof.

The ink layer may be formed on one entire surface or both entire surfaces of the substrate, and it may be formed in a pattern.

Whether the ink layer contains the solidified product of the ink composition of the disclosed embodiments, can be confirmed by taking a sample material from the ink layer and analyzing the sample material. As the analyzing method, examples include mass spectrometry (e.g., ESI-Mass), NMR, IR, inductively coupled plasma atomic emission spectroscopy, atomic absorption spectrometry, X-ray fluorescence spectrometry, X-ray absorption fine structure (XAFS) analysis, and combinations thereof. The analysis of the rare-earth metal can be carried out by use of multi-element inductively coupled plasma atomic emission spectrometer ICPE-9000 manufactured by Shimadzu Corporation, for example.

### <Substrate>

As the substrate, examples include, but are not limited to, papers such as a wood free paper, an art paper, a coated paper, a cast-coated paper, a synthetic resin- or emulsion-impregnated paper, a synthetic rubber latex-impregnated paper, a synthetic resin-added paper and a cellulose fiber paper; plastic sheets of various kinds of synthesis resins such as polyolefin (e.g., polyethylene, polypropylene, etc.), polystyrene, polycarbonate, polyethylene terephthalate, polyvinyl chloride and polymethacrylate; and white non-transparent films formed by adding a white pigment or a filler to these synthesis resins and forming the resins in the form of a film, or a film composed of a substrate containing microvoids therein (a so-called synthetic paper). The substrate is not needed to be in a film or sheet form, and it may be a molded resin product having a three-dimensional structure, for example.

### <Applications of printed product>

For the printed product 1 of the disclosed embodiments, the ink layer emits fluorescence by UV or the like, and a change in the emitted light color is caused by heating. Accordingly, various kinds of information can be managed by, while the ink layer is irradiated with excitation light by an excitation light source, appropriately heating and reading a change in the emitted light color by visual observation or by a detector or the like.

Due to the unique light emission property of the ink layer, the printed product 1 of the disclosed embodiments has high authenticity determination properties and anticounterfeiting properties.

As the printed product, examples include, but are not limited to, bills, checks, stock certificates, debenture stocks, marketable securities (e.g., various kinds of securities), banknotes, gift certificates, transportation tickets, admission tickets for paid facilities and events, lottery tickets, winning betting tickets for public sports, stamps, cards (e.g., credit cards), passports, ID cards, various kinds of commercial printed products and posters.

### 3. Authenticity determination method

The authenticity determination method of the disclosed embodiments is an authenticity determination method wherein authenticity determination is carried out by a change in emitted light color caused by frictional heat generated by rubbing an ink layer containing a solidified product of the ink composition of the disclosed embodiments.

An example of the authenticity determination method of the disclosed embodiments is shown below. It is not limited to these embodiments.

FIGS. 2 and 3 are views showing examples of the authenticity determination method of the disclosed embodiments. FIG. 2 shows that the ink layer 11 is rubbed by a rubbing tool 14 including a rubbing section 13, while excitation light irradiation 12 is carried out by an excitation light source on the ink layer 11 containing a solidified product of the ink composition of the disclosed embodiments. As a result, as shown in FIG. 3, only a rubbed section 15 causes a change in emitted light color by frictional heat generated by rubbing. Due to the unique light emission property of the ink layer, the authenticity determination method of the disclosed embodiments has high authenticity determination properties.

As a tool for rubbing the ink layer, a rubbing tool including a rubbing section in which frictional heat is generated by rubbing, may be used. As the rubbing section, examples include a section made of a low-wearing, elastic material. For example, a rubbing section such as a rubber section of a commercially-available thermochromic writing material, may be used.

As the change in the emitted light color caused by the frictional heat, a difference between light emission intensities in different wavelength ranges controlled by heat, may be detected by various kinds of detectors depending on the wavelengths.

### 4. Thermochromic light-emitting material

The thermochromic light-emitting material of the disclosed embodiments contains trivalent rare-earth ions and a phosphine oxide bidentate ligand represented by the following general formula (1') and coordinated to the rare-earth ions, and it contains a crosslinked structure formed by coordinating the phosphine oxide bidentate ligand to at least one rare-earth ion selected from the following group A and at least one rare-earth ion selected from the following group B.
Group A: Eu³⁺, Sm³⁺, Pr³⁺ and Ho³⁺
Group B: Tb³⁺, Er³⁺, Tm³⁺, Dy³⁺, Yb³⁺, Nd³⁺, Ce³⁺ and Gd³⁺ 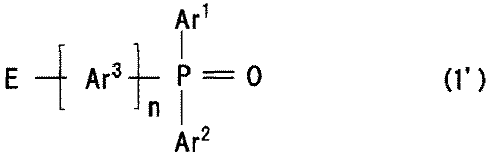
   in the general formula (1'), Ar¹ and Ar² are each independently a monovalent aromatic group optionally containing a substituent group; Ar³ is a divalent group represented by the following general formula (2a), (2b) or (2c); and n is 1 or 2: 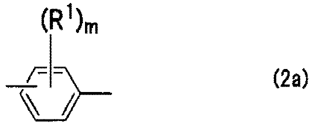 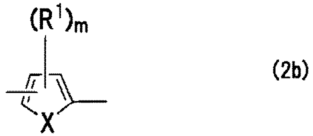 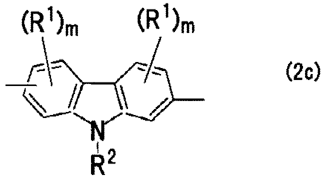
   in the general formulae (2a) to (2c), R¹ is each independently a monovalent substituent group; X is a sulfur atom or an oxygen atom; R² is a hydrogen atom or a hydrocarbon group; m is an integer of from 0 to a number of substitutable sites of a ring to which R¹ is bound; and when m is an integer of 2 or more, R¹s are optionally the same or different, and
   in the general formula (1'), E is a phosphine oxide group represented by the following general formula (3): 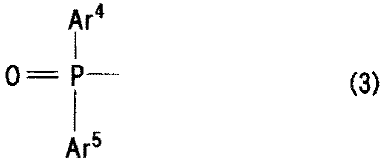
   in the general formula (3), Ar⁴ and Ar⁵ are each independently a monovalent aromatic group optionally containing a substituent group.

Ar¹, Ar² and Ar³ in the general formula (1') may be the same as Ar¹, Ar² and Ar³ in the general formula (1). Ar⁴ and Ar⁵ in the general formula (3) will not be described here, since they are described above.

The thermochromic light-emitting material of the disclosed embodiments contains the phosphine oxide bidentate ligand and a crosslinked structure formed by coordinating the phosphine oxide bidentate ligand to the at least one rare-earth ion selected from the group A and the at least one rare-earth ion selected from the group B.

The thermochromic light-emitting material of the disclosed embodiments is likely to cause a change in the light emission intensities of the different rare-earth ions, since the energy transfer between the different rare-earth ions via the phosphine oxide bidentate ligand is activated by temperature. Accordingly, before and after heating, the thermochromic light-emitting material of the disclosed embodiments causes a difference between the light emission intensity in the wavelength region by the at least one rare-earth ion selected from the group A and the light emission intensity by the at least one rare-earth ion selected from the group B, thereby causing a color change.

The thermochromic light-emitting material of the disclosed embodiments contains the phosphine oxide bidentate ligand and a crosslinked structure formed by coordinating the phosphine oxide bidentate ligand to the at least one rare-earth ion selected from the group A and the at least one rare-earth ion selected from the group B. Accordingly, it is a composite complex polymer containing two or more kinds of rare-earth ions, and it is excellent in heat resistance and excellent in light resistance and solvent resistance.

The thermochromic light-emitting material of the disclosed embodiments contains at least the phosphine oxide bidentate ligand. From the viewpoint of increasing the light emission intensity, it preferably further contains the above-described β-diketone ligand.

A preferred example of the thermochromic light-emitting material of the disclosed embodiments is the case where, among the rare-earth complexes containing the repeating unit represented by the general formula (7), Ln³⁺ of the general formula (7) contains at least one rare-earth ion selected from the group A and at least one rare-earth ion selected from the group B.

The thermochromic light-emitting material of the disclosed embodiments preferably contains Eu³⁺ and Tb³⁺ as the trivalent rare-earth ions, from the point of view that the difference between the changes in the light emission intensity when heated, is large, and the visibility of the change in the emitted light color is high.

In particular, from the viewpoint of increasing the visibility of the change in the emitted light color, it is preferable that when the thermochromic light-emitting material of the disclosed embodiments contains Eu³⁺ and Tb³⁺ as the trivalent rare-earth ions, it contains 1 mol or more and 300 mol or less of Tb³⁺ with respect to 1 mol of Eu³⁺.

### Examples

The following IR measurement was carried out by use of FT/IR-4600 manufactured by Nikon Corporation.

The following ¹H-NMR measurement was carried out by use of ESC400 (400 MHz) manufactured by JEOL Ltd., and tetramethylsilane (TMS) was used as the internal standard for chemical shift determination.

The following ESI-Mass measurement was carried out by use of THERMO SCIENTIC EXACTIVE manufactured by Thermo Fisher Scientific.

In the following elemental analysis, organic elemental microanalysis was carried out by use of CE440 manufactured by Exeter Analytical Inc.

### (Synthesis Example 1: Synthesis of Tb/Eu composite complex polymer (Compound 1))

### (1) Synthesis of 1,4-bis(diphenylphosphoryl)biphenyl (dpbp)

A 100 mL three-neck flask was frame-dried to replace the inside with argon gas. To this three-neck flask, 1.9 g (6.0 mmol) of 4,4'-dibromobiphenyl and 30 mL of tetrahydrofuran (THF) were added and cooled to about -80°C with liquid nitrogen/ethanol. To this solution, 9.3 mL (15 mmol) of a 1.6 M n-butyllithium hexane solution was slowly added with a syringe. This addition was carried out for about 15 minutes. During the addition, a yellow precipitate was produced. This solution was stirred at -10°C for 3 hours. Next, the solution was cooled again to -80°C. Then, 2.7 mL (15 mmol) of dichlorophenyl phosphide was dropwise added to the solution, and while stirring the solution for 14 hours, the temperature of the solution was gradually returned to room temperature. Then, the reaction was terminated, and extraction was carried out with ethyl acetate. The thus-obtained solution was washed three times with saturated brine and dried with anhydrous magnesium sulfate. Then, the solvent was evaporated with an evaporator. A crude product thus obtained was washed several times with acetone and ethanol to be purified, thereby obtaining a white powder.

Next, the white powder and about 40 mL of dichloromethane were put in a flask. The resulting solution was cooled to 0°C, and a 30% hydrogen peroxide solution (about 5 mL) was added thereto. The mixture was stirred for two hours. The resulting product was extracted with dichloromethane. Then, the extract was washed three times with saturated brine and dried with anhydrous magnesium sulfate. Then, the solvent was evaporated with an evaporator, thereby obtaining a white powder. The white powder was recrystallized with dichloromethane to obtain a white crystal of 1,4-bis(diphenylphosphoryl)biphenyl.

The analysis results of the white crystal were as follows. IR(ATR): 1119(st,P=O)cm⁻¹.

¹H-NMR (400MHz,CDCl₃,25°C) δ7.65-7.80(m,16H;P-C₆H₅,C₆H₄), 7.43-7.60(m,12H;P-C₆H₅,C₆H₄)ppm.

ESI-Mass(m/z)=555.2[M+H]⁺.

Elemental analysis:
(calculated value for C₃₆H₂₈O₂P₂) : C,77.97;H,5.09%,
(actual measured value): C,77.49;H,5.20%

### (2) Synthesis of Tb/Eu composite complex polymer (Compound 1)

Europium acetate, which is a raw material for Eu(III) ion, and 1,1,1,5,5-hexafluoro-2,4-pentanedione were mixed to synthesis tris(hexafluoroacetylacetonato(hfa))europium(III) dihydrate. Also, terbium acetate, which is a raw material for Tb(III) ion, and 1,1,1,5,5-hexafluoro-2,4-pentanedione were mixed to synthesis tris(hexafluoroacetylacetonato)terbium(III) dihydrate.

Next, 0.02 equivalent of the tris(hexafluoroacetylacetonato)europium(III) dihydrate, 0.98 equivalent of the tris(hexafluoroacetylacetonato)terbium(III)dihydrate and 1 equivalent of the 1,4-bis(diphenylphosphoryl)biphenyl (dpbp) obtained in the above (1) were dissolved in methanol (20 mL). The solution was refluxed while stirring for 8 hours. Then, a white powder precipitated in the reaction solution was separated by filtration, washed several times with methanol, and then dried under reduced pressure, thereby synthesizing a Tb/Eu composite complex polymer (a compound 1) in which Tb and Eu were at a molar ratio of 50/1 (Tb/Eu) (x/y represented by the following chemical formula = 50/1) .

As shown by the following chemical formula, the Tb/Eu composite complex polymer contains trivalent rare-earth ions and a phosphine oxide bidentate ligand represented by the general formula (1') and coordinated to the rare-earth ions, and it contains a crosslinked structure formed by coordinating the phosphine oxide bidentate ligand to Eu³⁺, which is at least one rare-earth ion selected from the group A, and Tb³⁺, which is at least one rare-earth ion selected from the group B.

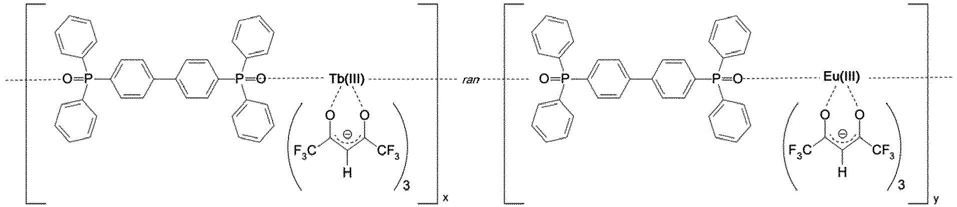

The analysis results of the obtained Tb/Eu composite complex polymer (the compound 1) were as follows.
IR(ATR): 1649(st,C=O),1250(st,C-F),1123(st,P=O)cm⁻¹
ESI-Mass (m/z)=1681.2 [Tb(hfa)₂(dpbp)₂]⁺,1911.2 [[Tb(hfa)₃(dpbp)₂] + Na]⁺, 1675.2 [Eu (hfa)₂(dpbp)_{2]}⁺,1905.2 [[Eu(hfa)₃(dpbp)₂]+ Na ]⁺
Elemental analysis:
   (calculated value for [C₅₁H₃₁Tb_{0.98}Eu_{0.02}F₁₈O₈P₂]ₙ) :C,45.90;H,2.34%, (actual measured value):C,45.85;H,2.19%

### (Synthesis Examples 2 to 4: Synthesis of Tb/Eu composite complex polymers (compounds 2 to 4))

Tb/Eu composite complex polymers (compounds 2 to 4) in each of which the molar ratio of Tb to Eu (Tb/Eu) is the value shown in Table 1, were synthesized in the same manner as Synthesis Example 1, except that the molar ratio of the tris(hexafluoroacetylacetonato)terbium(III)dihydrate to the tris(hexafluoroacetylacetonato)europium(III) dihydrate was changed to be the Tb/Eu ratio shown in Table 1.

**Table 1**

| | Tb/Eu |
|---|---|
| Compound 1 | 50/1 |
| Compound 2 | 100/1 |
| Compound 3 | 150/1 |
| Compound 4 | 250/1 |

The analysis results of the obtained Tb/Eu composite complex polymers (the compounds 2 to 4) were as follows.

### (Compound 2)

IR(ATR): 1652(st,C=O),1250(st,C-F),1123(st,P=O)cm⁻¹
ESI-Mass (m/z)=1681.2 [Tb(hfa)₂(dpbp)₂]⁺ ,1911.2[[Tb(hfa)₃(dpbp)₂] + Na]⁺,1675.2 [Eu(hfa)₂(dpbp)₂]⁺, 1905.2 [[Eu(hfa)₃(dpbp)₂]+Na]⁺
Elemental analysis:
   (calculated value for [C₅₁H₃₁Tb_{0.99}Eu_{0.01}F₁₈O₈P₂]ₙ):C,45.90;H,2.34%, (actual measured value):C,45.84;H,2.20%

### (Compound 3)

IR(ATR): 1652(st,C=O),1250(st,C-F),1123(st,P=O)cm⁻¹
ESI-Mass(m/z)=1681.2[Tb(hfa)₂(dpbp)₂]⁺ ,1911.2 [[Tb(hfa)₃(dpbp)₂] + Na]⁺, 1675.2[Eu(hfa)₂(dpbp)₂]⁺, 1905.2 [[Eu(hfa)₃(dpbp)_{2]}+ Na ]⁺
Elemental analysis:
   (calculated value for [C₅₁H₃₁Tb_{0.993}Eu_{0.007}F₁₈O₈P₂]ₙ):C,45.90;H,2.34%, (actual measured value):C,46.14;H,2.25%

### (Compound 4)

IR(ATR): 1650(st,C=O),1250(st,C-F),1123(st,P=O)cm⁻¹
ESI-Mass(m/z)=1681.2[Tb(hfa)₂(dpbp)₂]⁺ ,1911.2 [[Tb(hfa)₃(dpbp)₂] + Na]⁺, 1675.2[Eu(hfa)₂(dpbp)₂]⁺, 1905.2 [[Eu(hfa)₃(dpbp)₂]+ Na ]⁺
Elemental analysis:
   (calculated value for [C₅₁H₃₁Tb_{0.99}Eu_{0.004}F₁₈O₈P₂]ₙ):C,45.90;H,2.34%, (actual measured value):C,46.14;H,2.31%

### (Synthesis Example 5: Synthesis of Tb complex polymer (Compound 5))

A Tb complex polymer represented by the following chemical formula (a compound 5) was synthesized in the same manner as Synthesis Example 2, except that the raw material complex used was 1 equivalent of the tris(hexafluoroacetylacetonato)terbium(III) dihydrate only.

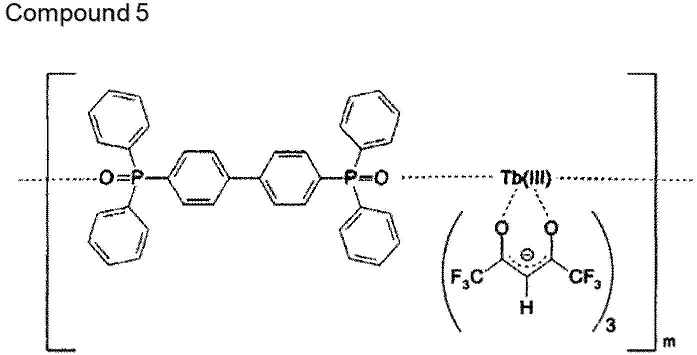

The analysis results of the obtained Tb complex polymer (the compound 5) were as follows.
IR(ATR): 1651(st,C=O),1250(st,C-F),1123(st,P=O)cm⁻¹
ESI-Mass(m/z)=1681.2[Tb(hfa)₂(dpbp)₂]⁺ ,1911.2[[Tb(hfa)₃(dpbp)₂] + Na]⁺
Elemental analysis:
   (calculated value for [C₅₁H₃₁TbF₁₈OaP₂]ₙ):C,45.90;H,2.34%,
   (actual measured value):C,45.86;H,2.19%

### (Synthesis Example 6: Synthesis of Eu complex polymer (Compound 6))

An Eu complex polymer represented by the following chemical formula (a compound 6) was synthesized in the same manner as Synthesis Example 1, except that the raw material complex used was 1 equivalent of the tris(hexafluoroacetylacetonato)europium(III) dihydrate only.

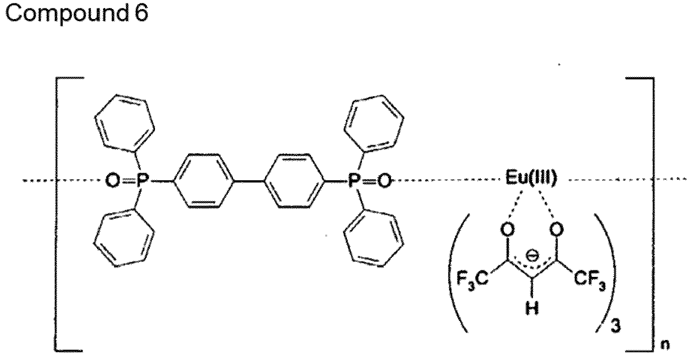

The analysis results of the obtained Eu complex polymer (the compound 6) were as follows.
IR(ATR): 1652(st,C=O),1250(st,C-F),1122(st,P=O)cm⁻¹,
ESI-Mass(m/z)=1675.2[Eu(hfa)₂(dpbp)₂₁⁺,1905.2[[Eu(hfa)₃(dpbp)₂₁+ Na ]⁺
Elemental analysis:
   (calculated value for [C₅₁H₃₁E_{U}F₁₈O₈P₂]ₙ):C,46.14;H,2.35%,
   (actual measured value):C,46.10;H,2.17%

### (Synthesis Example 7: Synthesis of Tb complex (Compound 7))

A methanol solution containing tris(hexafluoroacetylacetonato) terbium(III) synthesized in the same manner as Synthesis Example 1 and triphenylphosphine oxide (TPPO), was prepared. The solution was stirred for 12 hours while refluxing the solution. Then, the methanol was distilled under reduced pressure, thereby obtaining a white powder. The powder was washed with toluene, and unreacted tris(hexafluoroacetylacetonato) terbium(III) was removed therefrom by suction filtration. Then, the toluene was distilled under reduced pressure. A product thus obtained was washed with hexane, thereby obtaining a powder. In addition, the powder was purified by recrystallization using a mixed solvent of toluene and hexane, thereby synthesizing a Tb complex [Tb(hfa)₃(TPPO)₂] (a compound 7) represented by the following chemical formula.

It was confirmed by IR and elemental analysis that the obtained product was the Tb complex represented by the following chemical formula (the compound 7). The analysis results are shown below.
IR(ATR): 1653(st,C=O),1251(st,C-F),1122(st,P=O)cm⁻¹,
ESI-Mass(m/z)=1129.1[Tb(hfa)₂(TPPO)₂]⁺,1359.1[Tb(hfa)₃(TPPO)₂]+ Na]⁺
Elemental analysis:
   (calculated value for [C₅₁H₃₃TbF₁₈O₈P₂):C,45.83;H,2.49%,
   (actual measured value):C,45.35;H,2.24%

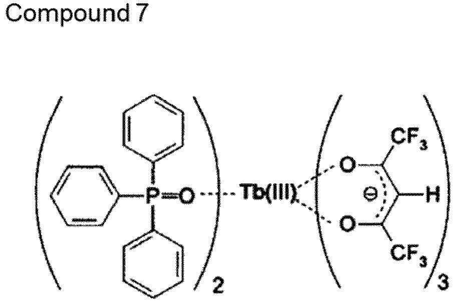

### (Synthesis Example 8: Synthesis of Eu complex (Compound 8))

A methanol solution containing tris(hexafluoroacetylacetonato)europium(III) synthesized in the same manner as Synthesis Example 1 and triphenylphosphine oxide (TPPO), was prepared. The solution was stirred for 12 hours while refluxing the solution. Then, the methanol was distilled under reduced pressure, thereby obtaining a white powder. The powder was washed with toluene, and unreacted tris(hexafluoroacetylacetonato)europium(III) was removed therefrom by suction filtration. Then, the toluene was distilled under reduced pressure. A product thus obtained was washed with hexane, thereby obtaining a powder. In addition, the powder was purified by recrystallization using a mixed solvent of toluene and hexane, thereby synthesizing an Eu complex [Eu(hfa)₃(TPPO)₂] (a compound 8) represented by the following chemical formula.

It was confirmed by IR and elemental analysis that the obtained product was the Eu complex represented by the following chemical formula (the compound 8). The analysis results are shown below.
IR(ATR): 1652(st,C=O),1251(st,C-F),1121(st,P=O)cm⁻¹,
ESI-Mass(m/z)= 1123.1[Eu(hfa)₂(TPPO)₂]⁺, 1353.1[[Eu(hfa)₃(TPPO)_{2]}+Na]⁺
Elemental analysis:
   (calculated value for [C₅₁H₃₃E_{U}F₁₈O₈P₂): C, 4 6.07 ; H, 2.50%,
   (actual measured value):C,46.10;H,2.34%

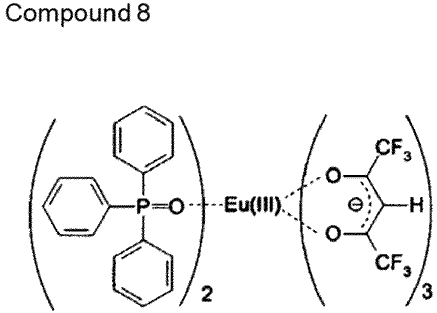

### (Example 1)

### (1) Production of ink composition

As a light-emitting material, 30 parts by weight of the compound 1 and as a vehicle, 70 parts by weight of a UV curable vehicle (product name: UV BF SG A MEDIUM, manufactured by: DIC Graphics Corporation) were mixed by three rollers, thereby obtaining an ink composition.

### (2) Production of printed product

The thus-obtained ink composition was applied to a printing paper with a bar coater. Then, the applied ink composition was photo-cured by UV irradiation, thereby obtaining the printed product of Example 1, which contained an ink layer containing a solidified product of the ink composition.

### (Examples 2 to 4)

Ink compositions were obtained in the same manner as Example 1, except that the compounds 2 to 4 were each used as the light-emitting material, in place of the compound 1.

Using the obtained ink compositions, printed products were obtained in the same manner as Example 1.

### (Example 5)

An ink composition was obtained in the same manner as Example 1, except that as the light-emitting material, a mixture of 10 parts by weight of the compound 5 and 1 part by weight of the compound 6 was used in place of the compound 1.

Using the obtained ink composition, a printed product was obtained in the same manner as Example 1.

### (Example 6)

An ink composition was obtained in the same manner as Example 1, except that as the light-emitting material, a mixture of 10 parts by weight of the compound 7 and 1 part by weight of the compound 8 was used in place of the compound 1.

Using the obtained ink composition, a printed product was obtained in the same manner as Example 1.

### (Example 7)

An ink composition was obtained in the same manner as Example 1, except that as the light-emitting material, a mixture of 290 parts by weight of the compound 7 and 1 part by weight of a compound 9 represented by the following chemical formula (Eu(TTA)Phen manufactured by Tokyo Chemical Industry Co., Ltd.) was used in place of the compound 1.

Using the obtained ink composition, a printed product was obtained in the same manner as Example 1.

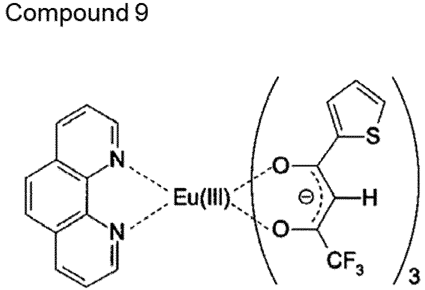

### (Comparative Example 1)

An ink composition was obtained in the same manner as Example 1, except that as the light-emitting material, the compound 5 was used in place of the compound 1.

Using the obtained ink composition, a printed product was obtained in the same manner as Example 1.

### (Comparative Example 2)

An ink composition was obtained in the same manner as Example 1, except that as the light-emitting material, the compound 6 was used in place of the compound 1.

Using the obtained ink composition, a printed product was obtained in the same manner as Example 1.

### (Comparative Example 3)

An ink composition was obtained in the same manner as Example 1, except that as the light-emitting material, a mixture of 70 parts by weight of a red light-emitting inorganic oxide (D1124 manufactured by Nemoto Lumi-Materials Co., Ltd., Y₂O₂S:Eu) and 30 parts by weight of a green phosphorescent material (GLL-300FF manufactured by Nemoto Lumi-Materials Co., Ltd., SrAl₂O₄:Eu,Dy) was used in place of the compound 1.

Using the obtained ink composition, a printed product was obtained in the same manner as Example 1.

### [Evaluation]

### <Light emission spectrum measurement>

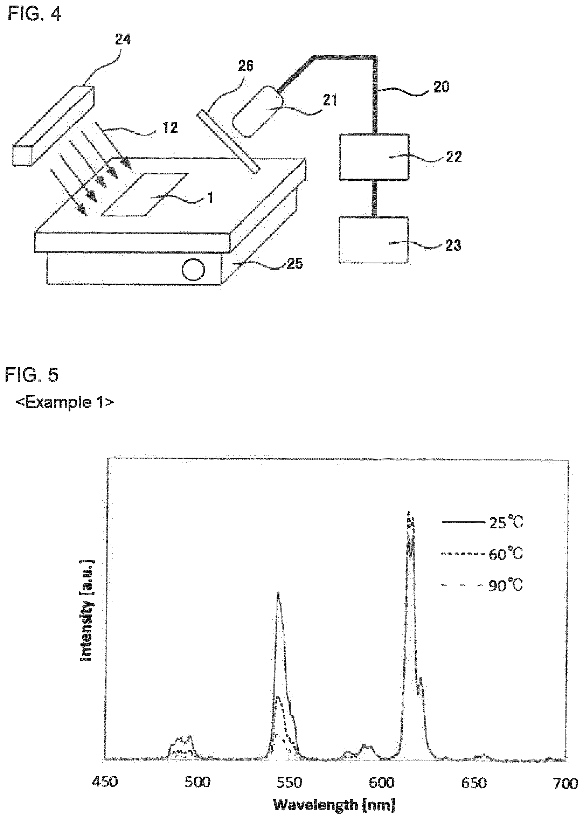

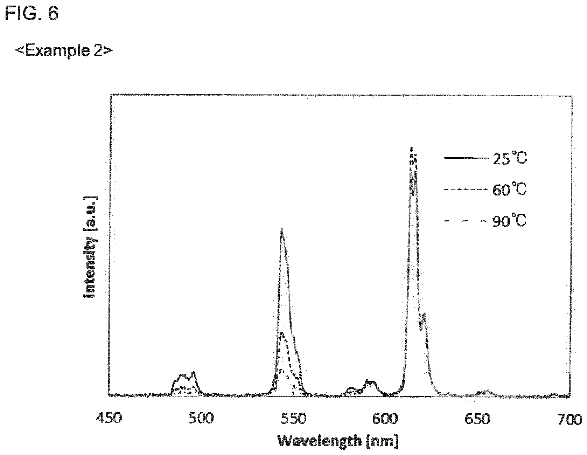

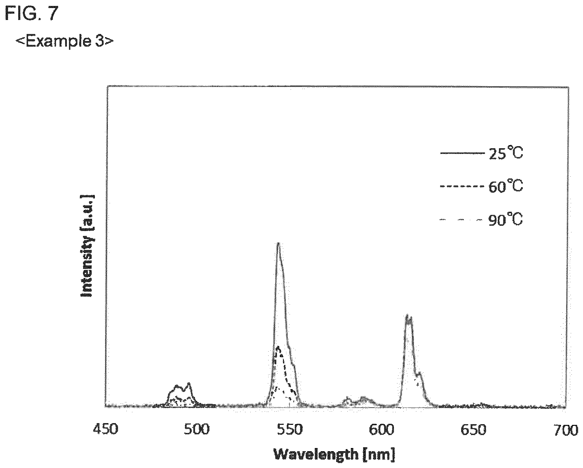

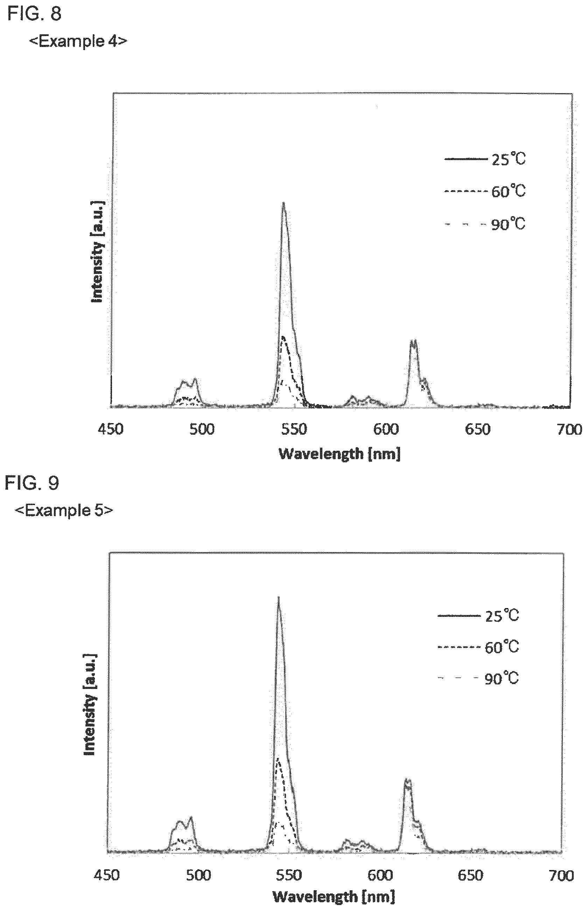

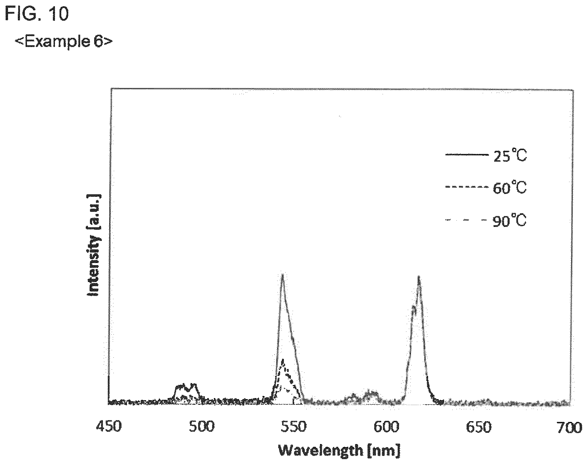

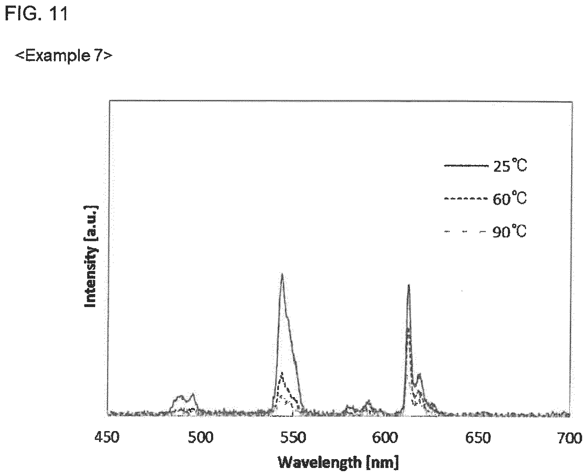

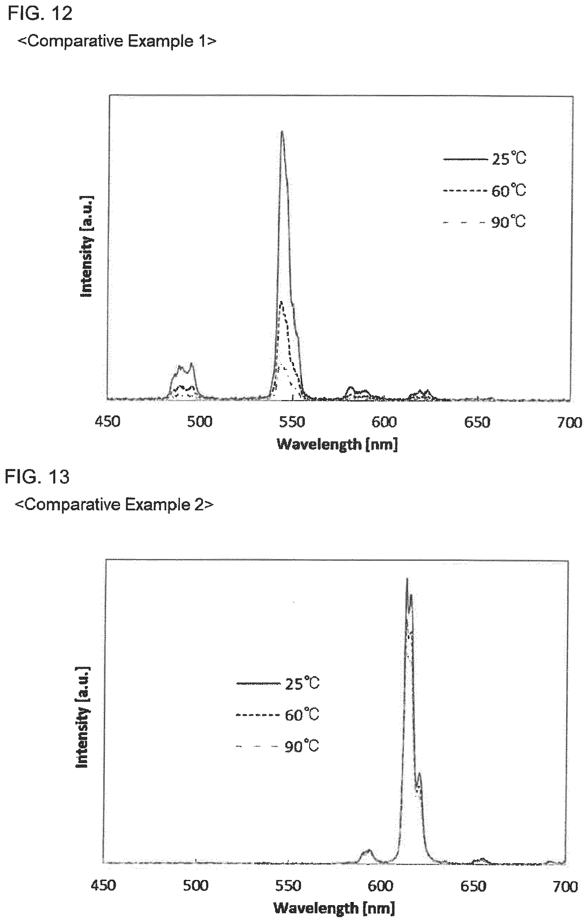

As shown in FIG. 4, the ink layer of the obtained printed product 1 of each of the examples and the comparative examples was placed on a hot plate 25; while irradiating it by use of a UV (excitation light) irradiation lamp 24 (HANDY UV LAMP SLUV-6 manufactured by AS ONE Corporation), light emission spectra excited at a wavelength of 365 nm at 25°C, 60°C and 90°C were obtained by use of a miniature fiber optic spectrometer 22 (USB2000+ manufactured by Ocean Optics, Inc.); and the emitted light color was checked by visual observation. For the ink layers of the printed products obtained in Examples 1 to 7 and Comparative Examples 1 to 3, the light emission spectra at 25°C, 60°C and 90°C are shown in FIGS. 5 to 14.

Also, the evaluation results are shown in Table 2. One for which color change was observed at 60°C or 90°C compared to the case of 25°C, is shown as A, and one for which color change was not observed, is shown as B.

### <Confirmation of color change of emitted light color by frictional heat>

For the ink layers of the obtained printed products of the examples and the comparative examples, color change by frictional heat in the light-emitting state excited at 365 nm using the UV (excitation light) irradiation lamp 24 (HANDY UV LAMP SLUV-6 manufactured by AS ONE Corporation) was observed. The frictional heat was generated by rubbing the ink layer surface with the rubber section of FRIXION BALL (trade name, manufactured by PILOT Corporation). In general, the frictional heat generated by rubbing with the rubber section is said to be 60 to 80°C.

The evaluation results are shown in Table 2. One for which color change was observed at normal temperature and after the rubbing, is shown as A, and one for which color change was not observed, is shown as B.

| Table 2 | | | | | |
|---|---|---|---|---|---|
| | Emitted light color by temperature and Color change | | | | Color change by rubbing |
| | 25°C | 60°C | 90°C | Color change | |
| Example 1 | Orange | Red | Red | A | A |
| Example 2 | Yellow-orange | Orange | Red | A | A |
| Example 3 | Yellow | Yellow-orange | Orange | A | A |
| Example 4 | Yellow-green | Yellow | Yellow-orange | A | A |
| Example 5 | Yellow-green | Yellow | Yellow-orange | A | A |
| Example 6 | Yellow-green | Orange | Red | A | A |
| Example 7 | Yellow | Yellow-orange | Yellow-orange | A | A |
| Comparative Example 1 | Green | Green | Green | B | B |
| Comparative Example 2 | Red | Red | Red | B | B |
| Comparative Example 3 | Yellow | Yellow | Yellow | B | A |

### (Conclusion)

For the ink layers of the printed products of Examples 1 to 4, each comprising the complex polymer in which at least Eu and Tb were introduced as the coordination metals, it was revealed that due to the energy transfer between metals or the energy transfer between metal and ligand, the emitted light color is changed by temperature, and the emitted light color before and after heating can be controlled by changing the ratio of Eu to Tb. Examples 2, 3 and 4, in each of which the mixing ratio of Tb to Eu (Tb/Eu) is from 100/1 to 250/1, were preferred since the color change range (contrast) is large, the color change by heat is large, and high visibility is obtained.

For Examples 5 to 7, in each of which two kinds of light-emitting materials, that is, the light-emitting material containing one kind of rare-earth ion selected from the group A and the light-emitting material containing one kind of rare-earth ion selected from the group B were mixed, it was also revealed that the emitted light color changes by temperature. It was revealed that the light emission intensity is relatively higher in Example 5 in which the compounds 5 and 6, that is, the mixture of the polymer complexes was used.

For Comparative Examples 1 and 2, each comprising the complex in which only one kind of metal was introduced, a change in the emitted light color did not occur.

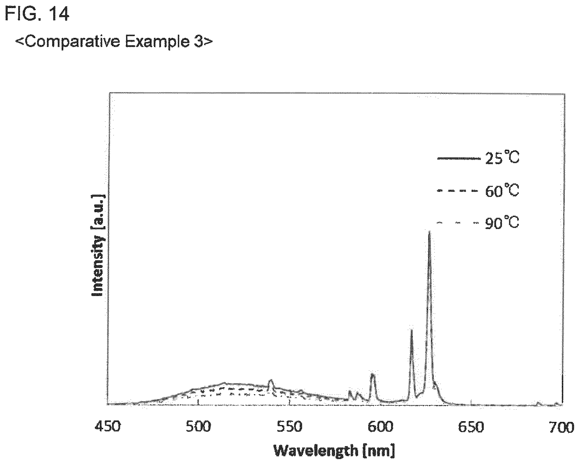

For Comparative Example 3 in which the red light-emitting inorganic oxide and the green phosphorescent material were combined, when heated on the hot plate like the printed products of the examples, a change in the emitted light color could not be confirmed by temperature. As shown in FIG. 14, in Comparative Example 3, the red and green light emission intensities slightly decrease at the almost same ratio by temperature increase. Accordingly, a change in the emitted light color cannot be confirmed even by visual observation. Meanwhile, for Comparative Example 3, when the ink layer was rubbed during UV irradiation, color change could be confirmed at normal temperature and after the rubbing. The fact that color change can be confirmed by rubbing the ink layer containing the phosphorescent material and the light-emitting substance, is first discovered. This phenomenon is thought to arise from the following characteristics of the phosphorescent material: "when put into a high temperature state from room temperature for a moment by frictional heat during UV irradiation, a trapped energy release rate is increased at once to make the emitted light stronger for a moment, and then the energy is released at once to weaken or lose the light emission". For Comparative Example 3, when the ink layer during UV irradiation was rubbed, color change could be confirmed at normal temperature and after the rubbing; however, the visibility was low compared to the color change in the case of rubbing the ink layers of the examples.

### Reference Signs List

- 1.: Printed product
- 10.: Substrate
- 11.: Ink layer
- 12.: Excitation light irradiation
- 13.: Rubbing section
- 14.: Rubbing tool
- 15.: Rubbed section
- 20.: Optical fiber
- 21.: Condenser lens
- 22.: Miniature fiber optic spectrometer
- 23.: Control personal computer
- 24.: UV (excitation light) irradiation lamp
- 25.: Hot plate (heating device)
- 26.: UV (excitation light) cut filter

## Claims

1. An authenticity determination method wherein authenticity determination is carried out by a change in emitted light color caused by frictional heat generated by rubbing an ink layer containing a solidified product of an ink composition comprising one or two or more kinds of rare-earth complexes containing trivalent rare-earth ions and at least one organic ligand selected from a β-diketone ligand, a carboxylic acid ligand, a phosphine oxide ligand and a nitrogen-containing aromatic heterocyclic ligand,
wherein at least one selected from the following group A and at least one selected from the following group B are contained as the trivalent rare-earth ions contained in the one or two or more kinds of rare-earth complexes:
Group A: Eu³⁺, Sm³⁺, Pr³⁺ and Ho³⁺
Group B: Tb³⁺, Er³⁺, Tm³⁺, Dy³⁺, Yb³⁺, Nd³⁺, Ce³⁺ and Gd³⁺.

2. The authenticity determination method according to Claim 1, wherein the rare-earth complex or complexes contain a phosphine oxide ligand represented by the following general formula (1) as the organic ligand: 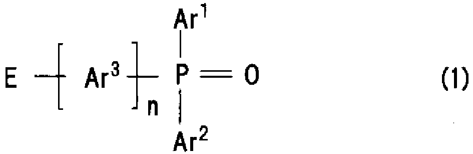
in the general formula (1), Ar¹ and Ar² are each independently a monovalent aromatic group optionally containing a substituent group; Ar³ is a divalent group represented by the following general formula (2a), (2b) or (2c) ; and n is 1 or 2: 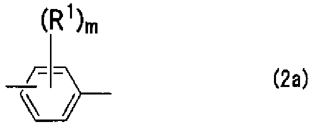 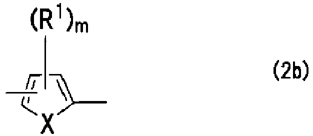 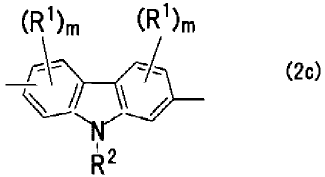
in the general formulae (2a) to (2c), R¹ is each independently a monovalent substituent group; X is a sulfur atom or an oxygen atom; R² is a hydrogen atom or a hydrocarbon group; m is an integer of from 0 to a number of substitutable sites of a ring to which R¹ is bound; and when there are a plurality of R¹s, they are optionally the same or different, and
in the general formula (1), E is a hydrogen atom or a phosphine oxide group represented by the following general formula (3): 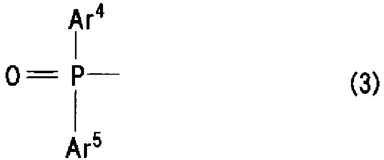
in the general formula (3), Ar⁴ and Ar⁵ are each independently a monovalent aromatic group optionally containing a substituent group.

3. The authenticity determination method according to Claim 1 or 2,
wherein the rare-earth complex or complexes contain a phosphine oxide bidentate ligand and a crosslinked structure formed by coordinating the phosphine oxide bidentate ligand to the at least one rare-earth ion selected from the group A and the at least one rare-earth ion selected from the group B.

4. The authenticity determination method according to any one of Claims 1 to 3, wherein the rare-earth complex or complexes contain a β-diketone ligand represented by the following general formula (4) as the organic ligand: 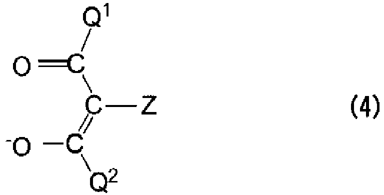 in the general formula (4), Q¹ and Q² are each independently a hydrocarbon group optionally containing a substituent group or an aromatic heterocyclic group optionally containing a substituent group, and Z is a hydrogen atom or a deuterium atom.

5. The authenticity determination method according to any one of Claims 1 to 4, wherein the rare-earth complex or complexes contain Eu³⁺ and Tb³⁺ as the trivalent rare-earth ions.

6. The authenticity determination method according to any one of Claims 1 to 5, wherein the rare-earth complex or complexes contain, as the trivalent rare-earth ions, 1 mol or more and 300 mol or less of Tb³⁺ with respect to 1 mol of Eu³⁺.

## Patentansprüche

1. Authentizitätsbestimmungsverfahren, wobei die Authentizitätsbestimmung durchgeführt wird durch eine Änderung in emittierter Lichtfarbe, verursacht durch Reibungswärme, erzeugt durch Reiben einer Tintenschicht, enthaltend ein verfestigtes Produkt einer Tintenzusammensetzung, umfassend eine oder zwei oder mehr Arten von Seltenerdkomplexen, enthaltend dreiwertige Seltenerdionen und mindestens einen organischen Liganden, ausgewählt aus einem β-Diketonliganden, einem Carbonsäureliganden, einem Phosphinoxidliganden und einem stickstoffhaltigen aromatischen heterocyclischen Liganden,
wobei mindestens eines, ausgewählt aus der folgenden Gruppe A, und mindestens eines, ausgewählt aus der folgenden Gruppe B, als die dreiwertigen Seltenerdionen enthalten sind, die in den einen oder zwei oder mehreren Arten von Seltenerdkomplexen enthalten sind:
Gruppe A: Eu³⁺, Sm³⁺, Pr³⁺ und Ho³⁺
Gruppe B: Tb³⁺, Er³⁺, Tm³⁺, Dy³⁺, Yb³⁺, Nd³⁺, Ce³⁺ und Gd³⁺.

2. Authentizitätsbestimmungsverfahren nach Anspruch 1, wobei der/die Seltenerdkomplex oder -komplexe einen Phosphinoxidliganden, dargestellt durch die folgende allgemeine Formel (1), als organischen Liganden enthalten: 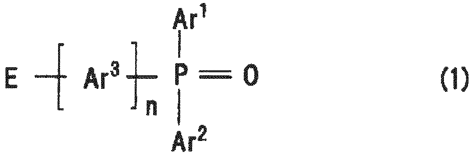
in der allgemeinen Formel (1) sind Ar¹ und Ar² jeweils unabhängig voneinander eine einwertige aromatische Gruppe, die gegebenenfalls eine Substituentengruppe enthält; ist Ar³ eine zweiwertige Gruppe, dargestellt durch die folgende allgemeine Formel (2a), (2b) oder (2c); und ist n 1 oder 2: 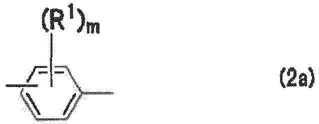 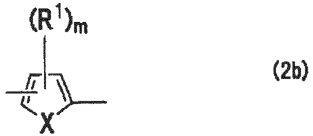 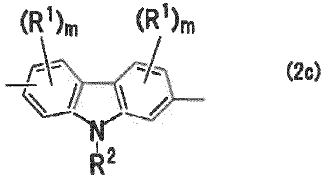
in den allgemeinen Formeln (2a) bis (2c) ist R¹ jeweils unabhängig eine einwertige Substituentengruppe; ist X ein Schwefelatom oder ein Sauerstoffatom; ist R² ein Wasserstoffatom oder eine Kohlenwasserstoffgruppe; ist m eine ganze Zahl von 0 bis zu einer Anzahl substituierbarer Stellen eines Rings, an den R¹ gebunden ist; und, wenn mehrere R¹ vorhanden sind, sind sie gegebenenfalls gleich oder verschieden, und
in der allgemeinen Formel (1) ist E ein Wasserstoffatom oder eine Phosphinoxidgruppe, dargestellt durch die folgende allgemeine Formel (3): 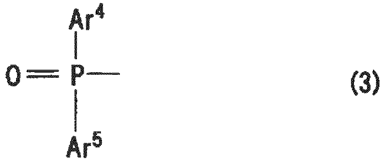
in der allgemeinen Formel (3) sind Ar⁴ und Ar⁵ jeweils unabhängig voneinander eine einwertige aromatische Gruppe, die gegebenenfalls eine Substituentengruppe enthält.

3. Authentizitätsbestimmungsverfahren nach Anspruch 1 oder 2,
wobei der/die Seltenerdkomplex oder -komplexe einen zweizähnigen Phosphinoxidliganden und eine vernetzte Struktur enthalten, gebildet durch Koordinierung des zweizähnigen Phosphinoxidliganden mit dem mindestens einen Seltenerdion, ausgewählt aus der Gruppe A, und dem mindestens einen Seltenerdion, ausgewählt aus der Gruppe B.

4. Authentizitätsbestimmungsverfahren nach einem der Ansprüche 1 bis 3, wobei der/die Seltenerdkomplex oder -komplexe einen β-Diketonliganden, dargestellt durch die folgende allgemeine Formel (4), als organischen Liganden enthalten: 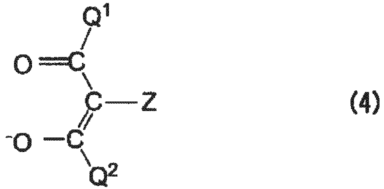 in der allgemeinen Formel (4) sind Q¹ und Q² jeweils unabhängig voneinander eine Kohlenwasserstoffgruppe, die gegebenenfalls eine Substituentengruppe enthält, oder eine aromatische heterocyclische Gruppe, die gegebenenfalls eine Substituentengruppe enthält, und ist Z ein Wasserstoffatom oder ein Deuteriumatom.

5. Authentizitätsbestimmungsverfahren nach einem der Ansprüche 1 bis 4, wobei der/die Seltenerdkomplex oder -komplexe Eu³⁺ und Tb³⁺ als die dreiwertigen Seltenerdionen enthalten.

6. Authentizitätsbestimmungsverfahren nach einem der Ansprüche 1 bis 5, wobei der/die Seltenerdkomplex oder -komplexe als die dreiwertigen Seltenerdionen 1 Mol oder mehr und 300 Mol oder weniger von Tb³⁺, bezogen auf 1 Mol von Eu³⁺, enthalten.

## Revendications

1. Procédé de détermination d'authenticité, dans lequel la détermination d'authenticité est effectuée par un changement de couleur lumineuse émise provoqué par de la chaleur frictionnelle générée en frottant une couche d'encre contenant un produit solidifié d'une composition d'encre comprenant un ou deux types ou plus de complexes de terres rares contenant des ions de terres rares trivalents et au moins un ligand organique sélectionné parmi un ligand de β-dicétone, un ligand d'acide carboxylique, un ligand d'oxyde de phosphine et un ligand hétérocyclique aromatique contenant de l'azote,
dans lequel au moins un sélectionné parmi le groupe suivant A et au moins un sélectionné parmi le groupe suivant B sont contenus en tant qu'ions de terres rares trivalents contenus dans le ou les deux types ou plus de complexes de terres rares :
Groupe A : Eu³⁺, Sm³⁺, Pr³⁺ et Ho³⁺
Groupe B : Tb³⁺, Er³⁺, Tm³⁺, Dy³⁺, Yb³⁺, Nd³⁺, Ce³⁺ et Gd³⁺.

2. Procédé de détermination d'authenticité selon la revendication 1, dans lequel le complexe ou les complexes de terres rares contiennent un ligand d'oxyde de phosphine représenté par la formule générale suivante (1) en tant que ligand organique : 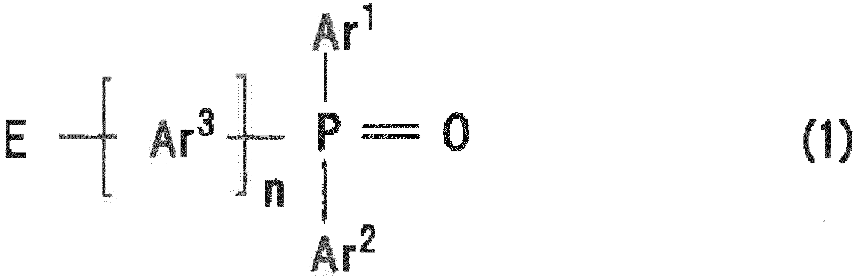
dans la formule générale (1), Ar¹ et Ar² sont chacun indépendamment un groupe aromatique monovalent contenant en option un groupe substituant ; Ar³ est un groupe divalent représenté par la formule générale suivante (2a), (2b) ou (2c) ; et n est 1 ou 2 : 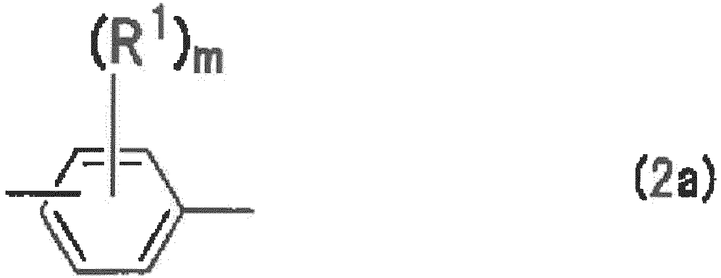 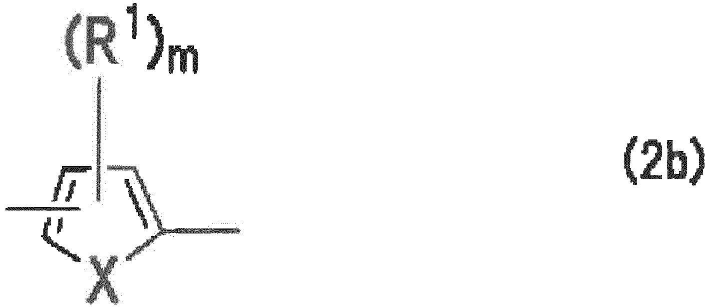 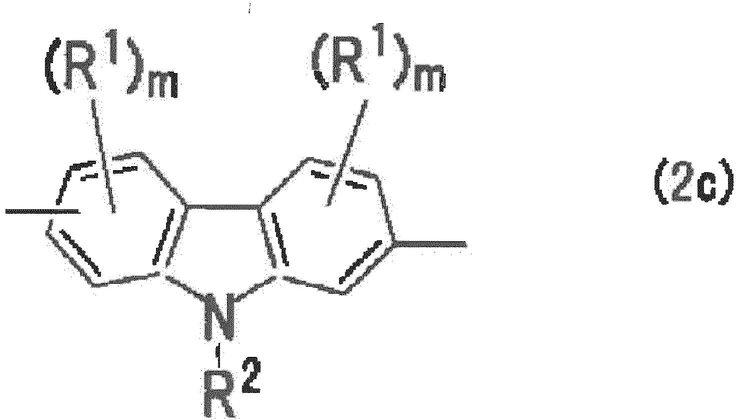
dans les formules générales (2a) à (2c), R¹ est chacun indépendamment un groupe substituant monovalent ; X est un atome de soufre ou un atome d'oxygène ; R² est un atome d'hydrogène ou un groupe hydrocarbure ; m est un entier allant de 0 à un nombre de sites pouvant être substitués d'un anneau auquel R¹ est lié ; et lorsqu'il y a une pluralité de R¹, ils sont en option identiques ou différents, et
dans la formule générale (1), E est un atome d'hydrogène ou un groupe d'oxyde de phosphine représenté par la formule générale suivante (3) : 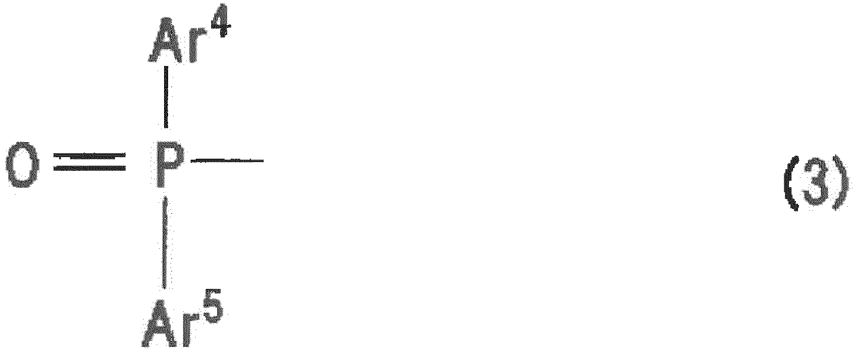
dans la formule générale (3), Ar⁴ et Ar⁵ sont chacun indépendamment un groupe aromatique monovalent contenant en option un groupe substituant.

3. Procédé de détermination d'authenticité selon la revendication 1 ou 2,
dans lequel le complexe ou les complexes de terres rares contiennent un ligand bidenté d'oxyde de phosphine et une structure réticulée formée en coordonnant le ligand bidenté d'oxyde de phosphine à l'au moins un ion de terres rares sélectionné parmi le groupe A et l'au moins un ion de terres rares sélectionné parmi le groupe B.

4. Procédé de détermination d'authenticité selon l'une quelconque des revendications 1 à 3, dans lequel le complexe ou les complexes de terres rares contiennent un ligand de β-dicétone représenté par la formule générale suivante (4) en tant que ligand organique : 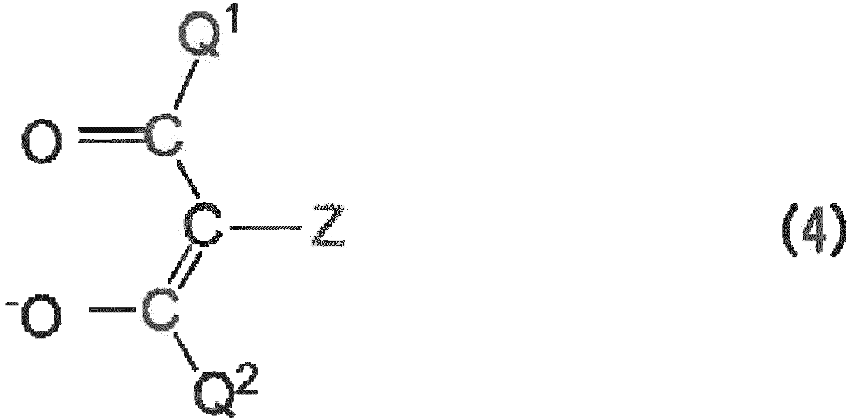 dans la formule générale (4), Q¹ et Q² sont chacun indépendamment un groupe hydrocarbure contenant en option un groupe substituant ou un groupe hétérocyclique aromatique contenant en option un groupe substituant, et Z est un atome d'hydrogène ou un atome de deutérium.

5. Procédé de détermination d'authenticité selon l'une quelconque des revendications 1 à 4, dans lequel le complexe ou les complexes de terres rares contiennent Eu³⁺ et Tb³⁺ en tant qu'ions de terres rares trivalents.

6. Procédé de détermination d'authenticité selon l'une quelconque des revendications 1 à 5, dans lequel le complexe ou les complexes de terres rares contiennent, en tant qu'ions de terres rares trivalents, 1 mole ou plus et 300 mole ou moins de Tb³⁺ par rapport à 1 mole de Eu³⁺.
